# EUROPEAN PATENT SPECIFICATION

(11) **EP 3 928 592 B1**
(45) Date of publication and mention of the grant of the patent: **09.04.2025**
(21) Application number: 20703317.6
(22) Date of filing: 23.01.2020
(51) Int. Cl.: H04W 76/19, H04L 45/28, H04W 40/12, H04W 40/22, H04W 40/34, H04W 84/04, H04W 88/08, H04W 92/20

(54) **COMPUTER PROGRAM, CARRIER, RADIO NETWORK NODE AND METHOD PERFORMED THEREIN**
COMPUTERPROGRAM, TRÄGER, FUNKNETZWERKKNOTEN UND DARIN AUSGEFÜHRTES VERFAHREN
PROGRAMME INFORMATIQUE, SUPPORT, NOEUD DE RÉSEAU RADIO ET PROCÉDÉ MIS EN OEUVRE

(30) Priority: 22.02.2019 US 201962808892 P
(43) Date of publication of application: 29.12.2021
(73) Proprietor: TELEFONAKTIEBOLAGET LM ERICSSON (PUBL), 164 83 Stockholm (SE)
(72) Inventor: TEYEB, Oumer, 171 44 Solna (SE); MILDH, Gunnar, 192 55 SOLLENTUNA (SE); PRADAS, Jose Luis, 118 27 STOCKHOLM (SE)
(74) Representative: Ericsson
(86) International application number: PCT/SE2020/050055
(87) International publication number: WO 2020/171750

(56) References cited:
- US-A- 5 941 955
- ERICSSON: "Solution proposal for the Impact on MRO from RRC re-establishment", vol. RAN WG3, no. Prague; 20140210 - 20140214, 1 February 2014 (2014-02-01), XP050755810, Retrieved from the Internet <URL:http://www.3gpp.org/ftp/tsg_ran/WG3_Iu/TSGR3_83/Docs/> [retrieved on 20140201]
- HUAWEI ET AL: "On backhaul link radio link failure handling for IAB", vol. RAN WG1, no. Athens, Greece; 20190225 - 20190301, 16 February 2019 (2019-02-16), XP051599232, Retrieved from the Internet <URL:http://www.3gpp.org/ftp/tsg%5Fran/WG1%5FRL1/TSGR1%5F96/Docs/R1%2D1901535%2Ezip> [retrieved on 20190216]
- ERICSSON: "Recovery from Link Failure in IAB Networks", vol. RAN WG3, no. Athens, Greece; 20190225 - 20190301, 15 February 2019 (2019-02-15), XP051604304, Retrieved from the Internet <URL:http://www.3gpp.org/ftp/tsg%5Fran/WG3%5FIu/TSGR3%5F103/Docs/R3%2D190363%2Ezip> [retrieved on 20190215]
- "3rd Generation Partnership Project; Technical Specification Group Radio Access Network; NR; Study on Integrated Access and Backhaul; (Release 16)", 11 January 2019 (2019-01-11), XP051576885, Retrieved from the Internet <URL:http://www.3gpp.org/ftp/tsg%5Fran/WG2%5FRL2/Specifications/201812%5Ffinal%5Fspecs%5Fafter%5FRAN%5F82/38874%2Dg00%2Ezip> [retrieved on 20190111]

## Description

### TECHNICAL FIELD

Embodiments herein relate to a first radio network node, a computer program, a carrier and a method **,** performed therein regarding wireless communication. In particular, embodiments herein relate to handling communication, such as handle failed recovery procedures and/or loss of connection, in a wireless communications network.

### BACKGROUND

In a typical wireless communications network, wireless devices, also known as wireless communication devices, mobile stations, stations (STA) and/or user equipment (UE), communicate via a Radio Access Network (RAN) with one or more core networks (CN). The RAN covers a geographical area which is divided into service areas or cell areas, with each service area or cell area being served by radio network node such as an access node e.g. a Wi-Fi access point or a radio base station (RBS), which in some networks may also be called, for example, a NodeB, a gNodeB, or an eNodeB. The service area or cell area is a geographical area where radio coverage is provided by the radio network node. The radio network node operates on radio frequencies to communicate over an air interface with the wireless devices within range of the radio network node. The radio network node communicates over a downlink (DL) to the wireless device and the wireless device communicates over an uplink (UL) to the radio network node.

A Universal Mobile Telecommunications System (UMTS) is a third generation telecommunication network, which evolved from the second generation (2G) Global System for Mobile Communications (GSM). The UMTS terrestrial radio access network (UTRAN) is essentially a RAN using wideband code division multiple access (WCDMA) and/or High-Speed Packet Access (HSPA) for communication with user equipment. In a forum known as the Third Generation Partnership Project (3GPP), telecommunications suppliers propose and agree upon standards for present and future generation networks and UTRAN specifically, and investigate enhanced data rate and radio capacity. In some RANs, e.g. as in UMTS, several radio network nodes may be connected, e.g., by landlines or microwave, to a controller node, such as a radio network controller (RNC) or a base station controller (BSC), which supervises and coordinates various activities of the plural radio network nodes connected thereto. The RNCs are typically connected to one or more core networks.

Specifications for the Evolved Packet System (EPS) have been completed within the 3GPP and this work continues in the coming 3GPP releases, such as 4G and 5G networks such as New Radio (NR). The EPS comprises the Evolved Universal Terrestrial Radio Access Network (E-UTRAN), also known as the Long-Term Evolution (LTE) radio access network, and the Evolved Packet Core (EPC), also known as System Architecture Evolution (SAE) core network. E-UTRAN/LTE is a 3GPP radio access technology wherein the radio network nodes are directly connected to the EPC core network. As such, the Radio Access Network (RAN) of an EPS has an essentially "flat" architecture comprising radio network nodes connected directly to one or more core networks.

With the emerging 5G technologies such as new radio (NR), the use of very many transmit- and receive-antenna elements is of great interest as it makes it possible to utilize beamforming, such as transmit-side and receive-side beamforming. Transmit-side beamforming means that the transmitter can amplify the transmitted signals in a selected direction or directions, while suppressing the transmitted signals in other directions. Similarly, on the receive-side, a receiver can amplify signals from a selected direction or directions, while suppressing unwanted signals from other directions.

3GPP is studying potential solutions for efficient operation of integrated access and wireless access backhaul (IAB) in NR, i.e. using relay nodes to enhance performance of the wireless communication network.

In integrated access and wireless access backhaul, or integrated access backhaul (IAB) for short, there are two kinds of network nodes that are identified as components of a RAN. First, a radio network node denoted as IAB-node, which is a RAN node that supports wireless access to UEs and wirelessly backhauls the access traffic. Furthermore a central network node denoted as an IAB-donor, which is a RAN node which provides UE's interface to core network and wireless backhauling functionality to IAB nodes.

IAB strives to reuse existing functions and interfaces defined for access. In particular, Mobile-Termination (MT), gNodeB (gNB)-Distributed Unit (DU), gNB-Central Unit (CU), User Plane Function (UPF), Access and Mobility Management Function (AMF) and Session Management Function (SMF) as well as the corresponding interfaces NR Uu (between MT and gNB), F1, NG, X2 and N4 are used as baseline for the IAB architectures. Modifications or enhancements to these functions and interfaces for the support of IAB will be explained in the context of the architecture discussion. Additional functionality, such as multi-hop forwarding i.e. using multiple IAB nodes and intermediate nodes before reaching the IAB-donor, is included in the architecture discussion as it is necessary for the understanding of IAB operation and since certain aspects may require standardization.

The Mobile-Termination (MT) function has been defined as a component of the Mobile Equipment. In the context of this study, MT is referred to as a function residing on an IAB-node that terminates the radio interface layers of a backhaul Uu interface toward the IAB-donor or other IAB-nodes.

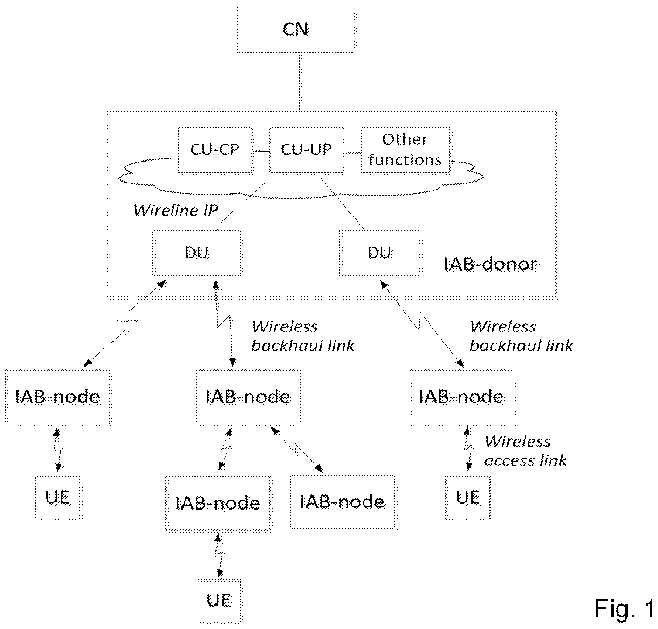

**Fig. 1** shows a reference diagram for IAB in standalone mode, which comprises one IAB-donor and multiple IAB-nodes. The IAB-donor may be treated as a single logical node that comprises a set of functions such as gNB-DU, gNB-CU-control plane (CP), gNB-CU-user plane (UP) and potentially other functions. In a deployment, the IAB-donor may be split according to these functions, which may all be either collocated or non-collocated as allowed by 3GPP NG-RAN architecture. IAB-related aspects may arise when such split is exercised. Also, some of the functions presently associated with the IAB-donor may eventually be moved outside of the IAB-donor in case it becomes evident that they do not perform IAB-specific tasks. Figure 1 is a reference diagram for IAB-architectures (TR 38.874 v0.7.0).

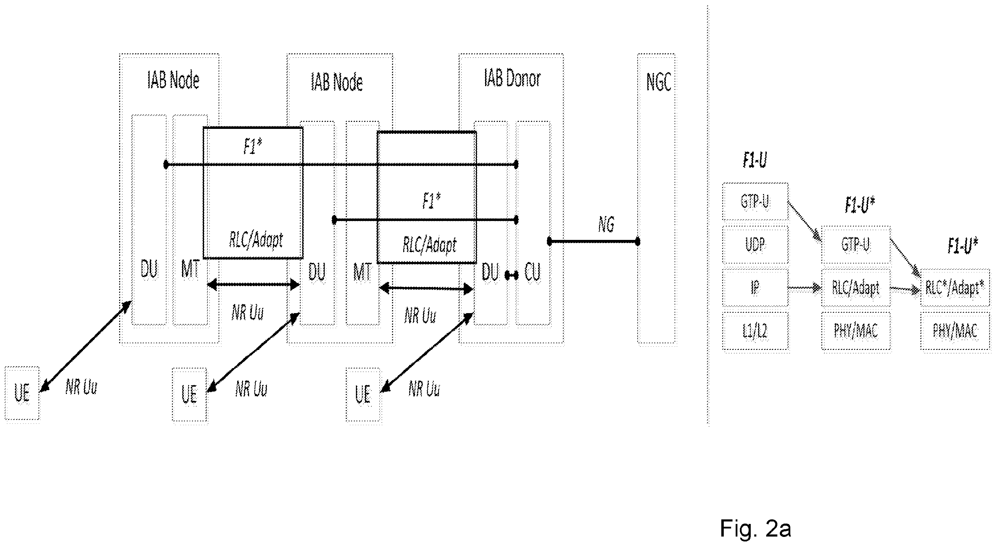

**Figs. 2a****-e** illustrate different potential architecture options to implement IAB, as identified in TR 38.874 v0.7.0:
After analyzing the differences between these options during the study item phase of IAB specifications, 3GPP has concluded to standardize the architecture shown in fig. 2a for Release 16. And the proposed User Plane (UP) and Control Plane (CP) protocol stacks are shown below:

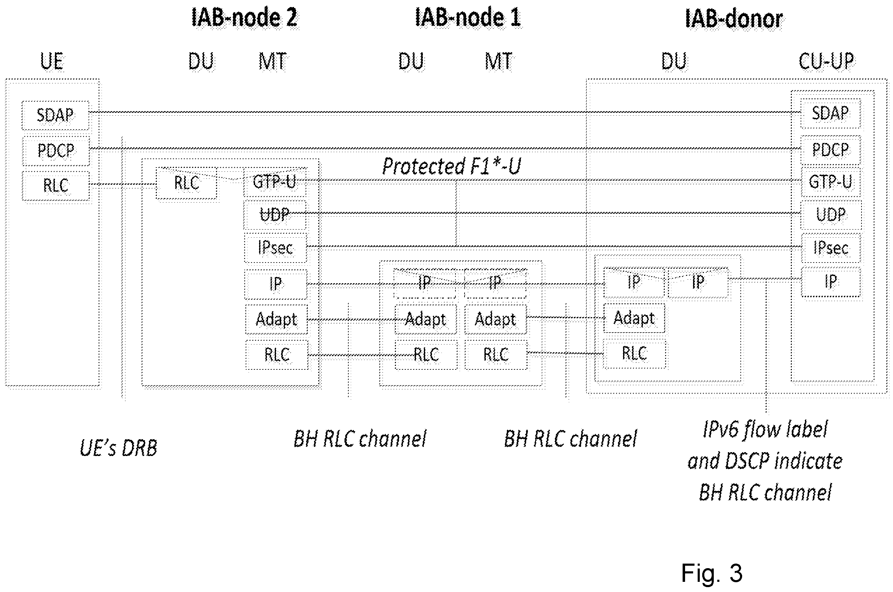

**Fig. 3** shows a UP protocol stack for the architecture shown in Fig. 2a.

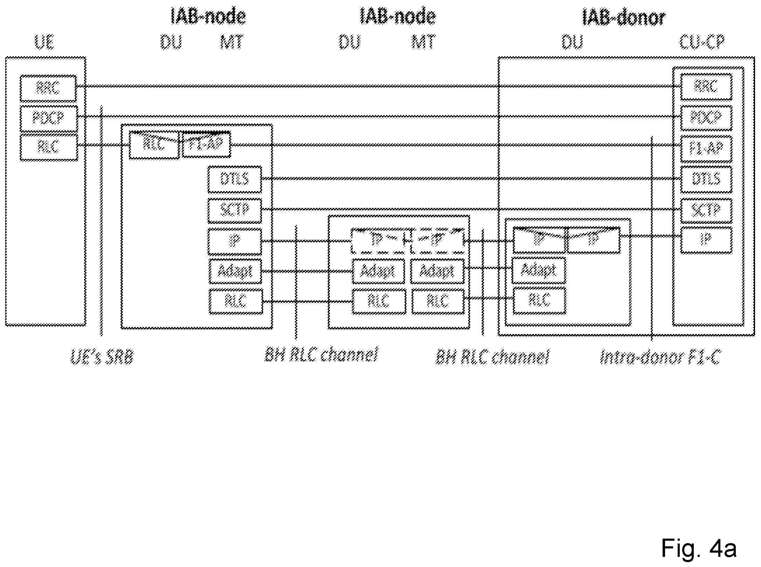

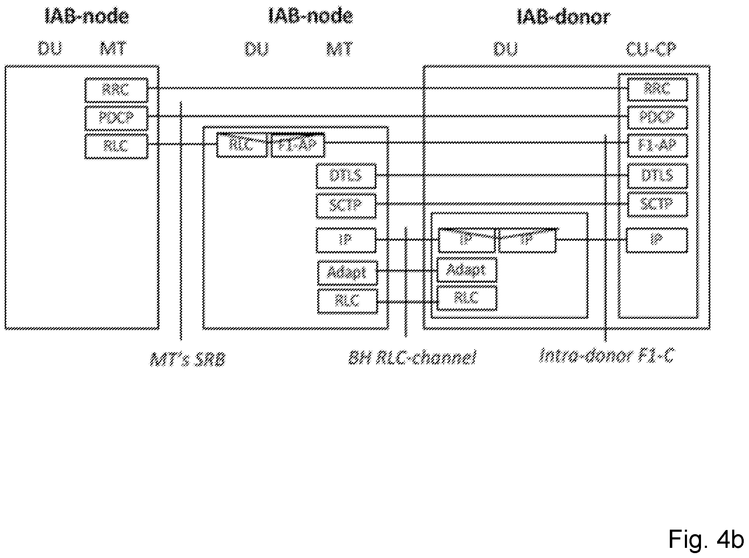

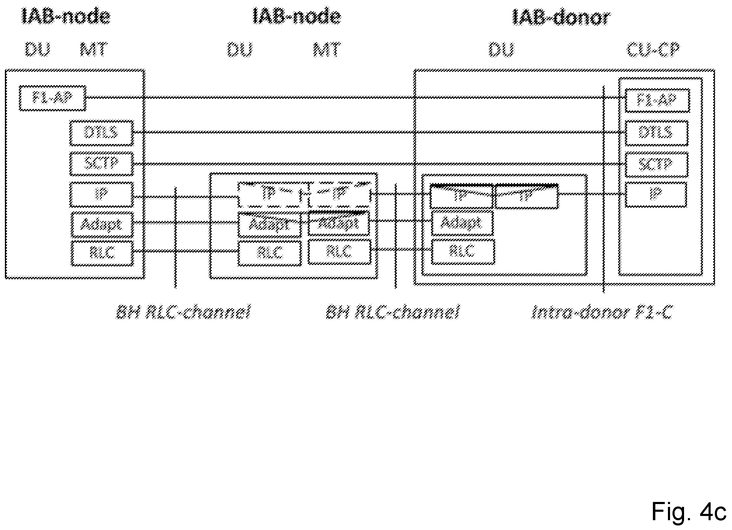

**Figs. 4a****-c** shows CP protocol stacks for the architecture shown in Fig. 2a. Fig. 4a shows an UE's Radio Resource Control (RRC), Fig. 4b shows a MT's RRC and Fig. 4c shows an IAB DU's F1-AP. The chosen protocol stacks reuse the current CU-DU split specification in Release15, where the full F1-U, GPRS Tunneling Protocol user data (GTP-U)/ User Datagram Protocol (UDP)/Internet Protocol (IP), is terminated at the IAB node, like a normal DU, and the full F1-C interface (F1-AP/ Stream Control Transmission Protocol (SCTP)/IP) is also terminated at the IAB node, like a normal DU. In the above cases, Network Domain Security (NDS) has been employed to protect both UP and CP traffic, IPsec in the case of UP, and Datagram Transport Layer Security (DTLS) in the case of CP. IPsec may also be used for the CP protection instead of DTLS.

One commonality between the CP and UP protocol stacks is that a new layer, e.g. adaptation layer, has been introduced in the intermediate IAB nodes and the IAB donor, which may be used for routing of packets to the appropriate downstream/upstream node and also mapping the UE bearer data to the proper backhaul Radio Link Control (RLC) channel, and also between backhaul RLC channels in intermediate IAB nodes, to satisfy the end to end Quality of Service (QoS) requirements of bearers.

Some highlights about the operation of the transmitter and receiver side follows:

### Packet Data Convergence Protocol (PDCP)

The PDCP entity receives PDCP Service Data Units (SDUs) from higher layers and these SDUs are assigned a Sequence Number (SN) and delivered to lower layers, i.e. RLC. A discardTimer is also started at the time a PDCP SDU is received. When the discardTimer expires, the PDCP SDU is discarded and a discard indication is sent to lower layers. RLC, when possible, will then discard the RLC SDU.

In the receiver side, the PDCP entity starts a timer denoted t-reordering of a reordering process when it receives packets in out-of-order. When the t-reordering expires, the PDCP entity updates the variable RX_DELIV which indicates the value of the first PDCP SDU not delivered to the upper layers i.e. it indicates the lower side of the receiving window.

### RLC

In the transmitter side, when a RLC SDU is received from higher layers a SN is associated to it. The transmitter may set the poll bit to request the receiver side to transmit a status report. When this is done, a timer called the t-pollRetransmit is started. Upon expiration of this timer, the transmitter will again set the poll bit and may further retransmit those Protocol Data Units (PDU) which were waiting to be acknowledged.

The receiver, on the other hand, will start a timer called the t-reassembly when RLC PDUs are not received in sequence. The function is similar to the t-reordering in PDCP. The timer is started when there is a SN gap i.e. a RLC PDU is missing. When t-reassembly expires, for acknowledgement mode (AM), the receiver will transmit a status report to trigger a retransmission in the transmitter side.

### Medium access control (MAC)

When the UE has data to be transmitted, it will request for a grant by means of the Scheduling Request (SR) or Buffer Status Report (BSR).

### Backhaul (BH)-link-failure

Backhaul link failure recovery scenarios.

A backhaul link when used herein refers to a link from IAB nodes to a donor IAB DU or to other IAB nodes which are parents of the first IAB node.

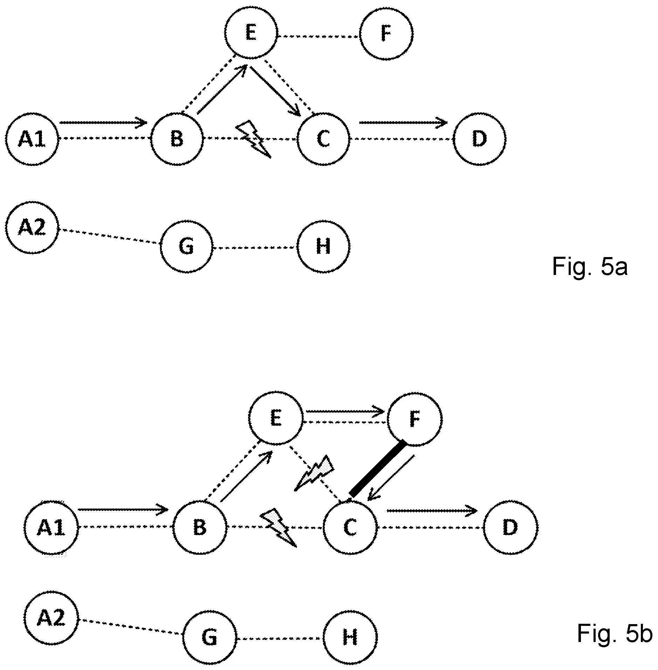

Due to various reasons, different scenarios of backhaul-link failure may happen in IAB networks. In **Figs. 5a****-c** example scenarios are described for backhaul-link failure. Each scenario is depicted with an illustrative figure (Figs. 5a-c) aiming at establishing a route between an IAB-donor and IAB-node D after a BH-link failure, where:
- Nodes A1 and A2 are IAB-donor nodes and nodes B to H are IAB-nodes.
- The dashed lines represent the established connections between two nodes.
- The arrows represent the established route after BH-link failure and the thick un-dashed line represents the new established connection.

**Fig. 5a** shows an example of backhaul-link failure scenario 1.

### Scenario 1

In this scenario, depicted in Fig. 5a, the backhaul-link failure occurs between on upstream IAB-node, e.g. IAB-node C and one of its parent IAB-nodes, e.g. IAB-node B, where the upstream IAB-node, i.e. IAB-node C, has an additional link established to another parent node, i.e. IAB-node E.

**Fig. 5b** shows an example of backhaul-link failure scenario 2.

### Scenario 2

In this scenario, depicted in Fig. 5b, the backhaul-link failure occurs between an upstream IAB-node, e.g. IAB-node C, and all its parent IAB-nodes, e.g. IAB-nodes B and E. The upstream IAB-node, i.e. IAB-node C, has to reconnect to a new parent node, e.g. IAB-node F, and the connection between IAB-node F and IAB-node C is newly established.

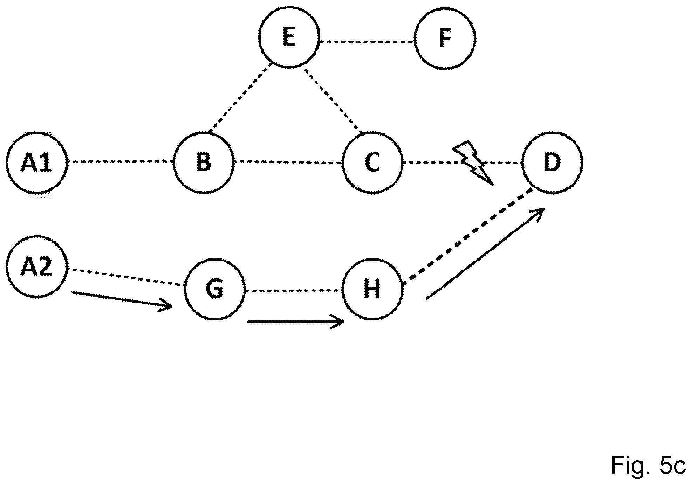

**Fig. 5c** shows an example of backhaul-link failure scenario 3.

### Scenario 3

In this scenario, depicted in Fig. 5c, the backhaul-link failure occurs between IAB-node C and IAB-node D. IAB-node D has to reconnect to the new IAB-donor, e.g. IAB-donor A2, via a new route.

Principal steps of BH Radio Link Failure (RLF) recovery of the architecture shown in Fig. 2a.

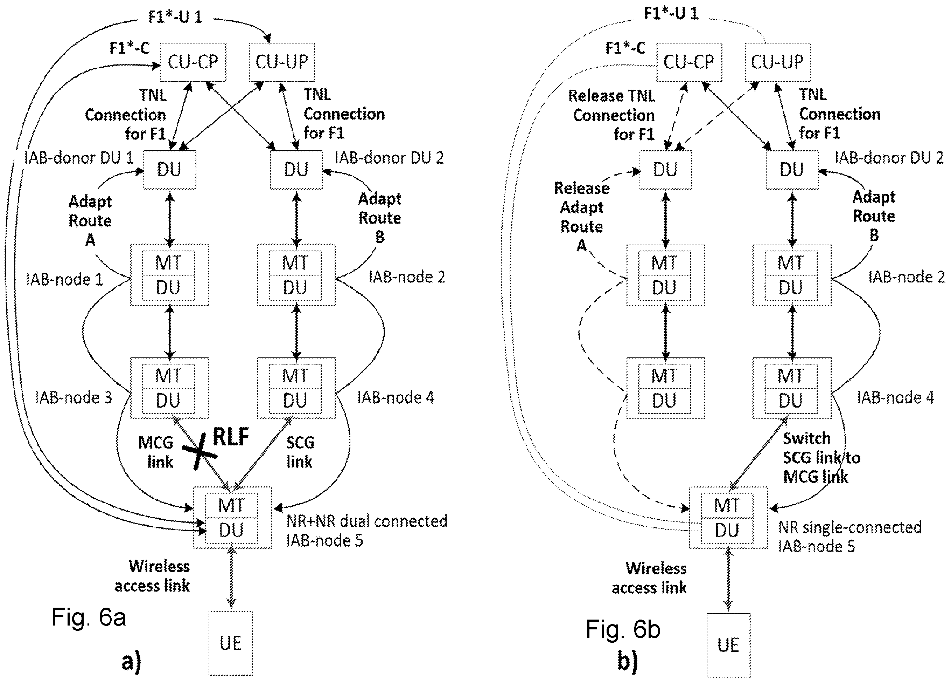

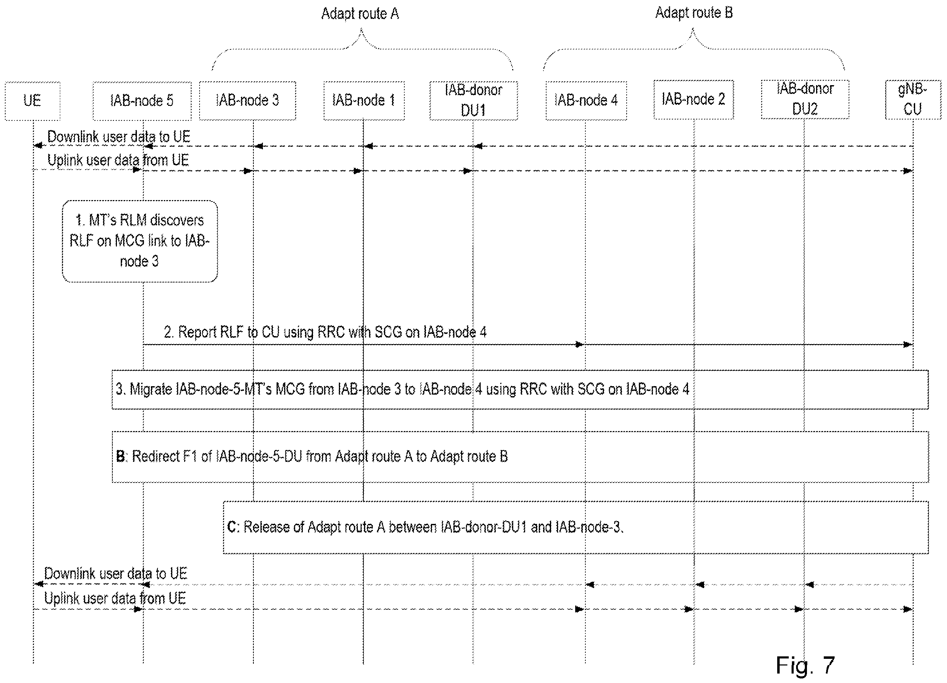

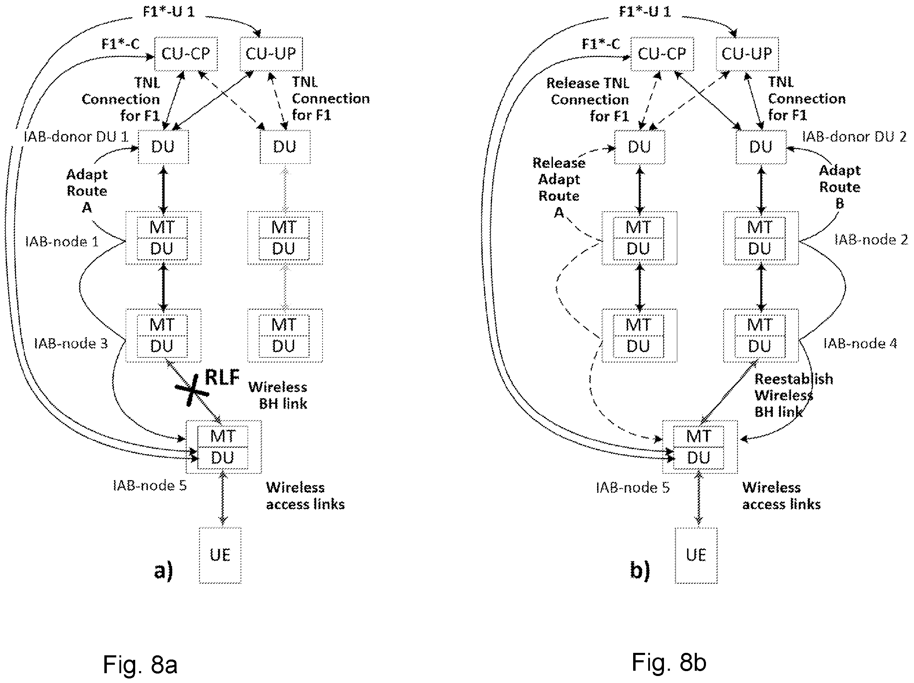

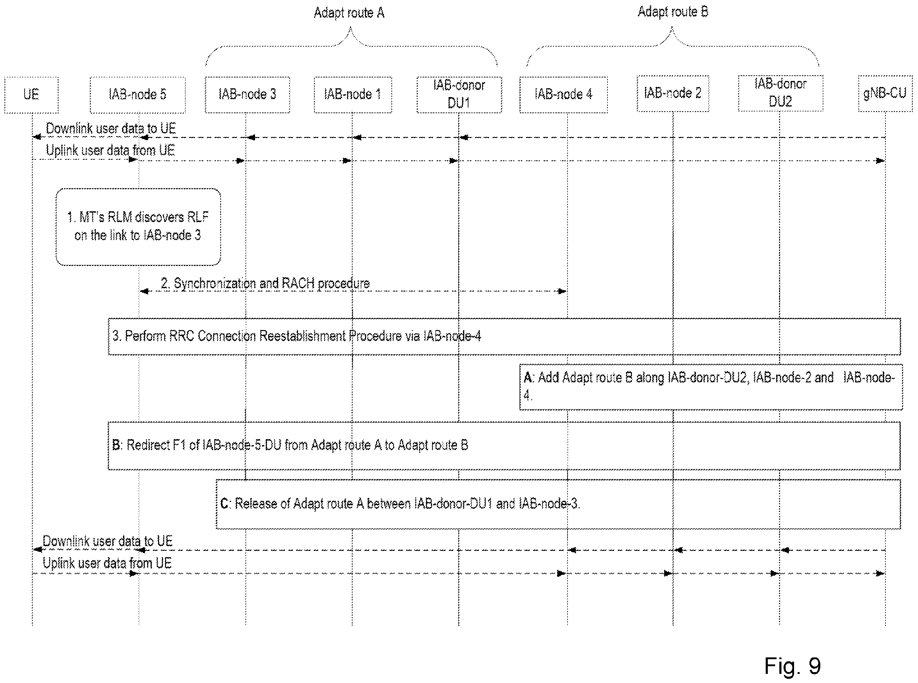

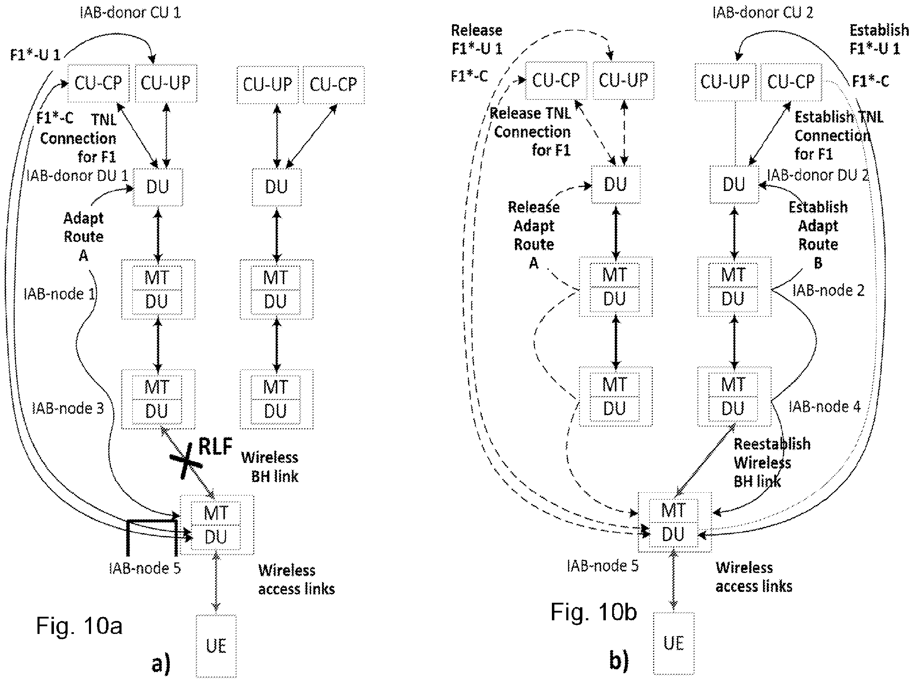

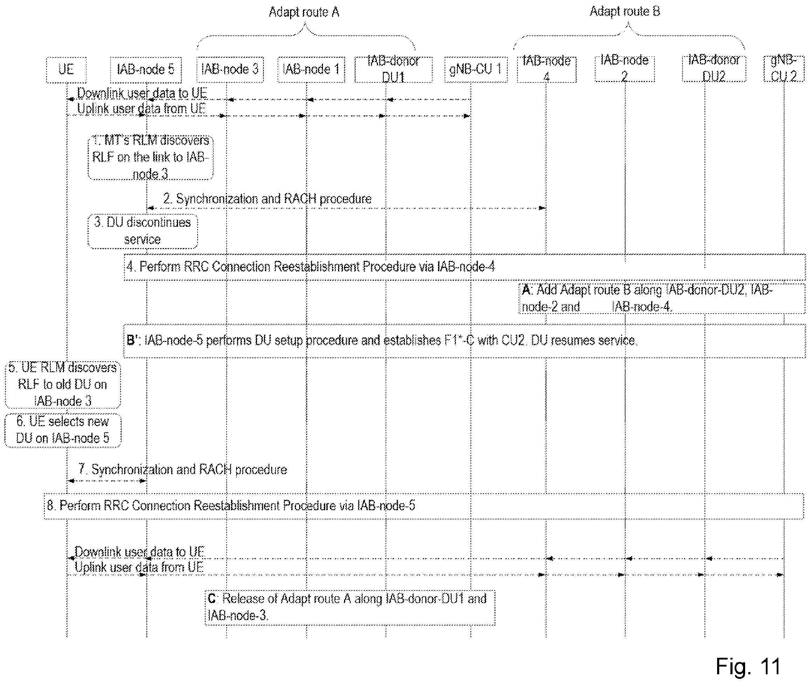

In the following, three scenarios of backhaul RLF and subsequent recovery are described:
- Scenario 1: Recovery via an existing BH link, shown in **Fig. 6a****-b** and **Fig. 7****.**
- Scenario 2: Recovery via a newly established BH link using the same IAB-donor CU, shown in **Fig. 8a****-b** and **Fig. 9****.**
- Scenario 3: Recovery via a newly established BH link using a different IAB-donor CU, shown in **Fig. 10a****-b** and **Fig 11****.**

**Fig. 7** illustrates Scenario 1: procedure for BH RLF recovery using existing backhaul link.

In scenario 1, **Figs. 6a****-b and** **Fig.7****,** the MT on IAB-node-5 is dual-connected to IAB-node-3 and IAB-node-4, which hold Master Cell Group (MCG) and Secondary Cell Group (SCG), respectively. Two adaptation layer routes have been established, one referred to as Adapt route A via IAB-node-3, and the other referred to as Adapt route B via IAB-node 4. It is assumed that Adapt route A is used for backhauling of access traffic for the UE attached to IAB-node-5. The RLF is further assumed to occur on the link to the MCG on IAB-node-3. The SCG link to IAB-node-5 may further be in RRC-inactive state.

**Fig. 7** shows one example for the recovery procedure for scenario 1:
1. The MT on IAB-node-5 conducts RLM on both links and discovers RLF on the link to MCG on IAB-node-3.
2. The MT may report MCG RLF over SCG RRC to the CU-CP using NR DC procedures. This step implies that such reporting is supported by NR DC. In case the SCG link is in RRC inactive state the MT will resume the RRC connection on this link.
3. The CU-CP migrates the MT's MCG from IAB-node-3 to IAB-node-4 using NR DC procedures. This step implies that such procedure is supported by NR DC.

B. The CU-CP migrates the F1*-U connection with the DU on IAB-node-5 to Adapt route B. It further uses Adapt route B for F1*-C signalling with the DU on IAB-node-5. This step also has to be applied to all descendent IAB-nodes of IAB-node-5.
C. The CU-CP may release Adapt route A.

After BH RLF recovery, the CU-CP can add topologically redundant BH links and routes.

NOTE: While the Scenario 1 recovery procedure is presented for the case of multi-connectivity of single-MT IAB-nodes, it is expected that a similar solution is applicable to the case of multi-connected multi-MT IAB-nodes.

Fig. 8: Scenario 2: BH topology with BH RLF and after recovery via new BH link using same CU (3b).

Fig. 9: Scenario 2: Procedure for BH RLF recovery using new BH link using same CU.

In scenario 2, **Fig. 8a** **and b** and **Fig. 9****,** the MT on IAB-node-5 is single connected to IAB-node-3. One adaptation layer route has been established via IAB-node-3 referred to as Adapt route A. The RLF is assumed to occur on the link between IAB-node-5 and its parent node IAB-node-3.

**Fig. 9** shows one example the recovery procedure for scenario 2:
1. The MT on IAB-node-5 conducts RLM on the link to its parent and discovers RLF.
2. The MT on IAB-node-5 synchronizes with the DU on IAB-node-4 and performs RACH procedure.
3. The MT on IAB-node-5 initiates RRC-Connection-Reestablishment leveraging existing NR procedures. Since the CU is the same as before, it has all context of this MT. IAB-node-5 discovers that the CU has not changed through a CU-specific identifier provided to the MT. Consequently, IAB-node-5's DU can keep the existing F1-AP with the CU.

A. The CU-CP establishes Adapt route B to IAB-node-5 via IAB-donor DU2, IAB-node-2 and IAB-node-4.
B. The CU-CP migrates F1*-U with the DU on IAB-node-5 to Adapt route B. It further uses Adapt route B for F1*-C signalling with the DU on IAB-node-5. This step also has to be applied to all descendent IAB-nodes of IAB-node-5.
C. The CU-CP may release Adapt route A.

After BH RLF recovery, the CU-CP can add topologically redundant BH links and routes.

**Fig. 10a** **and b.** Scenario 3: BH topology with BH RLF and after recovery via new BH link with different CU.

**Fig. 11****.** Scenario 3: Procedure for BH RLF recovery using new BH link with different CU.

In scenario 3 (Fig. 10a and b, and Fig. 11), the MT on IAB-node-5 is single-connected to IAB-node-3. One adaptation layer route has been established via IAB-node-3 referred to as Adapt route A. The RLF is assumed to occur on the link between IAB-node-5 and its parent node IAB-node-3.

Fig. 11 shows one example for the recovery procedure for scenario 3:
1. The MT on IAB-node-5 conducts RLM on the link to its parent and discovers RLF.
2. The MT on IAB-node-5 synchronizes with the DU on IAB-node-4 and performs RACH procedure.
3. The DU on IAB-node-5 discontinues service since it has lost F1*-C connectivity to gNB-CU-1.
4. The MT on IAB-node-5 initiates RRC-Connection-Reestablishment leveraging existing NR procedures. Since the CU is different, it may or may not be able to fetch the context of this MT. IAB-node-5 discovers that the CU has changed from a CU-specific identifier provided to the MT. Consequently, IAB-node-5 has to restart F1-AP from its DU to the new CU.
   A. The new CU-CP establishes Adapt route B to IAB-node-5 via IAB-donor DU2, IAB-node-2 and IAB-node-4.
   B. The DU on IAB-node-5 initiates a new F1*-C connection to the new CU-CP. This procedure is the same as IAB-node setup phase 2.2 described in section 9.3 of TR 38.874. The DU will obtain a new configuration during that procedure which, e.g., a new PCI. After that, the DU resumes service.
5. The UE determines RLF with the prior DU entity on IAB-node-5.
6. The UE discovers and selects the new DU entity on IAB-node-5
7. The UE conducts random access procedure with this new DU entity on IAB-node-5.
8. The UE initiates RRC-Connection-Reestablishment with the new CU-CP leveraging NR procedures. The new CU-CP may or may not be able to fetch the UE's context from the old CU-CP. The new CU-CP will set up F1*-U for the UE with the new DU on IAB-node-5 following NR procedures.
C. The CU-CP releases Adapt route A. This release may be based on F1*-C failure detection.

After BH RLF recovery, the CU-CP can add topologically redundant BH links and routes.

Steps 3, 4, A, B, C and potentially steps 1 and 2 also have to be applied by all descendant IAB-nodes of IAB-node-5. Further, steps 4, 5 and 6 will also be applied by all UEs connected to descendant IAB-nodes of IAB-node-5.

As these steps show, the BH RLF recovery procedure via new backhaul link with a different CU may cause multiple subsequent RLFs for descendant IAB-nodes and UEs. This may cause long service interruption for UEs. Further enhancements are needed to reduce this service interruption.

**Downstream notification of BH RLF** as illustrated in the architecture in Fig. 2a above.

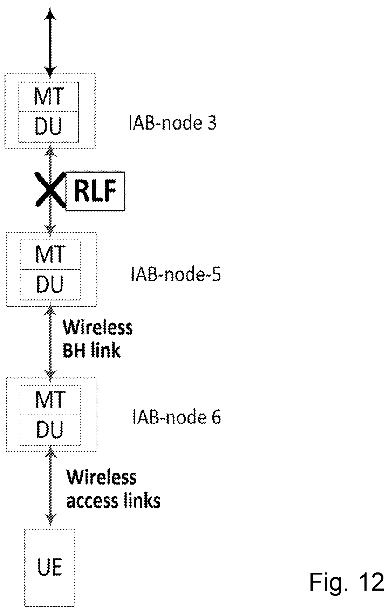

**Fig. 12** shows a topology with multiple IAB-node generations below BH RLF. When the IAB-node observes RLF on its parent link, it cannot provide further backhaul service to downstream IAB-nodes. Also, child IAB-nodes cannot further serve their descendant IAB-nodes. One example is shown in Fig. 12, where IAB-node-5 observes RLF to its parent IAB-node-3 and subsequently cannot provide backhaul service to its child node, i.e., IAB-node-6.

While the IAB-node observing RLF is aware about backhaul connectivity loss, the descendent IAB-nodes do not have explicit means to identify this upstream backhaul connectivity loss. In case the RLF can be recovered swiftly, as it can be expected for BH-RLF-recovery scenario 1, there may be no need to explicitly inform the descendant IAB-nodes about the temporary BH connectivity loss. When the BH RLF cannot be recovered swiftly, it may be beneficial to release backhaul connectivity to descendant IAB-nodes so that they themselves can seek means to recover from the BH RLF. For this purpose, three options may be considered:
- Option 1: The IAB-node DU discontinues service. Consequently, the child nodes will also determine BH RLF and follow through the above procedures to recover.
- Option 2: The IAB-node DU explicitly alerts child IAB-nodes about the upstream RLF. Child IAB-nodes receiving this alert may forward the alert further downstream. Each IAB-node receiving such alert initiates BH-RLF recovery as discussed above.
- Option 3: Every IAB-node may regularly share information on, e.g., BH quality, to its child or parent IAB-nodes. In this manner, downstream or upstream RLF may be sensed without taking explicit actions.

In case a descendant IAB-node, such as IAB-node 6 may recover from such an upstream RLF by using one of the procedures described above, its DU can provide BH RLF-recovery for former ancestor nodes, such as IAB-node 5.

### Efficient backhaul-link-failure recovery

The recovery procedure for backhaul failure in scenarios 2 and 3 consists of identifying an alternate parent node and establishing/re-establishing control plane and user plane through the alternate parent node. However, identifying and attaching to an alternate node may take a significant amount of time and may also not always be possible, e.g. due to lost connectivity with Donor CU or due to lack of alternative parent nodes, especially in millimeter-wave deployments. It may be necessary to consider how the IAB network is reorganized when there is a backhaul failure in a way that minimizes interruption time of connection with the IAB-donor.

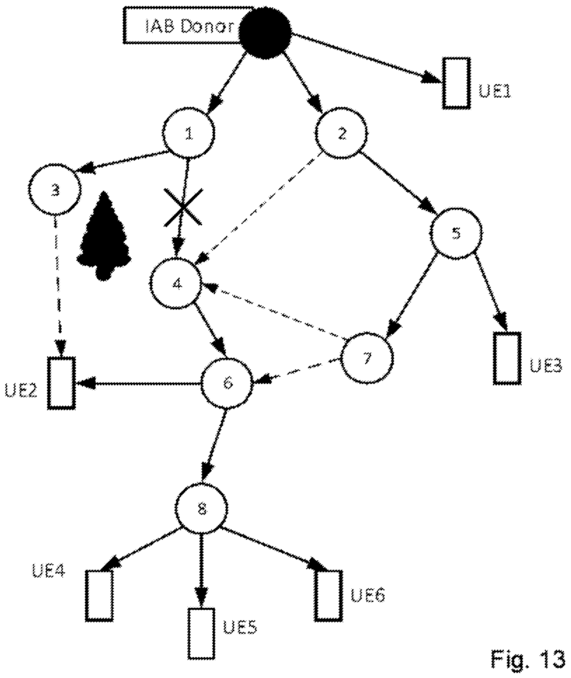

**Fig. 13** shows an example of a recovery after BH RLF in an IAB network.

Fig. 13 thus illustrates a scenario of a backhaul failure on one of the links in an IAB network. In such scenario, many IAB-nodes and UEs may be left without a connection to the IAB-donor and may need to find alternate parent nodes. Downstream IAB-nodes, e.g. IAB-nodes 4, 6 in Fig. 13, and the IAB-donor may need to be informed of the backhaul failure. Furthermore, if all the affected IAB-nodes simultaneously try to find alternate parent nodes, the resulting topology may be inefficient.

The following may be considered for recovery from backhaul failures:
- Information may be provided to downstream IAB-nodes regarding backhaul failure including a list of nodes that cannot serve as parent nodes due to the backhaul failure.
- Preparation of alternative backhaul links and routes in advance, i.e. before occurrence of RLF.

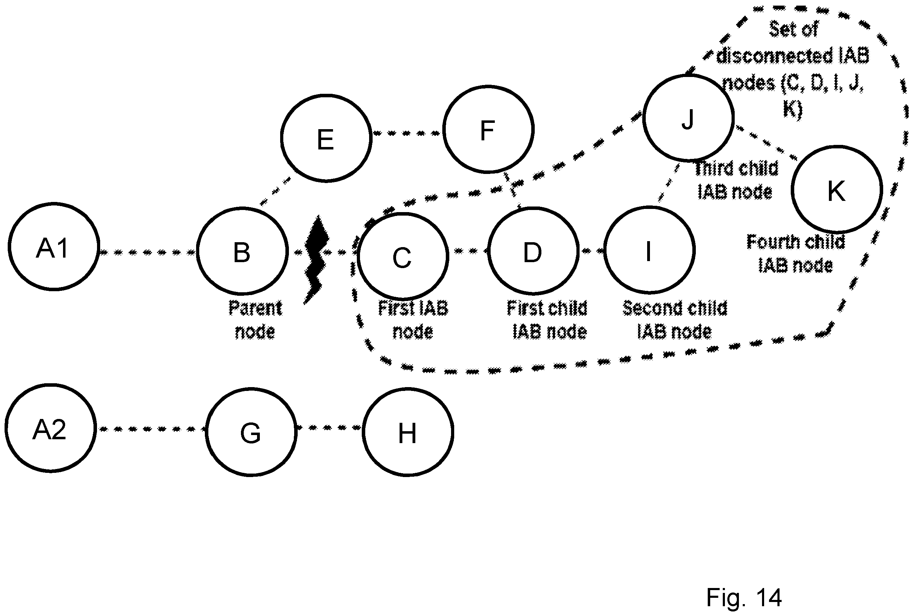

As described above there are different backhaul failure scenarios and different mechanisms to recover from them. A drawback is illustrated in **Fig. 14****,** where several IAB nodes, e.g. descendant/child IAB nodes, may be left disconnected from the IAB-donor, i.e. Node A1, due to a failure of a backhaul link on the path to the donor. For the scenario shown in Fig. 14, the failure of the backhaul link of IAB node C will cause the descendant nodes of IAB node C (D, I, J, and K) to be disconnected as well.

As already described above, mechanisms are already proposed where the affected IAB node, i.e. node C, may send indications to its descendant IAB nodes. The descendant IAB nodes may then try to find alternate parent nodes. However, this may lead to a chaotic situation where several nodes in the worst case could re-connect to other nodes which are also affected by the same backhaul failure.

### SUMMARY

It has previously been explored mechanisms on how the children IAB nodes behave upon the reception of the indication from their parent IAB node that it has experienced a backhaul link failure, e.g. throttle UL transmission or stop sending scheduling requests. A children IAB node is a node that, in the upstream direction, is connected to a second IAB node or the donor IAB node.

Further are solutions explored where the nodes involved in the failure could exchange information about existing alternative paths which could be used to recover the connection. This solution could enable fast link recovery via these paths, it would however not assist the nodes in connecting through paths that are not set up yet. Since the nodes involved in the link failure also temporarily lose contact with the rest of the network and the IAB donor node, it is not possible to obtain information of these possible alternative paths from IAB donor at the time of the link failure. In the previous solutions, however, it is not described how a radio network node such as an IAB node experiencing a link failure and performing re-establishment also known as recovery procedure should determine when to indicate to children nodes, or wireless devices connected to the IAB node that the recovery has failed. Recovery failure could happen due to many different reasons e.g. related to that the IP address the IAB node was assigned prior to the link failure is no longer valid, which in turn could mean that the IAB node need to re-establish the F1 connection, which in turn can lead to that the F1 UE contexts setup prior to the link failure is lost.

Furthermore, no mechanism is described on how the children IAB node could determine, by themselves, when to stop waiting for a parent node to recover the link and instead attempt recovery themselves.

An object herein is to provide a mechanism to enable communication, e.g. handle or manage connection failure, in an efficient manner in a wireless communications network. The object is achieved by the independent claims.

An advantage of embodiments herein is to provide means for connected radio network nodes to remain connected to a parent radio network node such as the first radio network node performing the first recovery procedure until it is determined that the first recovery procedure will not be successful, or it is taking too long time, e.g. exceeding service requirements. Thus, embodiments herein enable communication, e.g. handle or manage connection failure, in an efficient manner in a wireless communications network.

Since the success of a recovery procedure is highly depended on which node the first radio network node attempts to perform the requirement in, e.g. if that node is connected to a same network node such as an IAB donor gNB as first radio network node, or if an IP address of the first radio network node is still valid in the network node that the first radio network node is recovery with, this mechanism will be useful as a mean to determine when it is time to for connected nodes, such as the radio network node or wireless devices, to attempt their own recovery.

### BRIEF DESCRIPTION OF THE DRAWINGS

Embodiments will now be described in more detail in relation to the enclosed drawings, in which:
- Fig. 1: is a is a reference diagram depicting IAB in standalone mode;

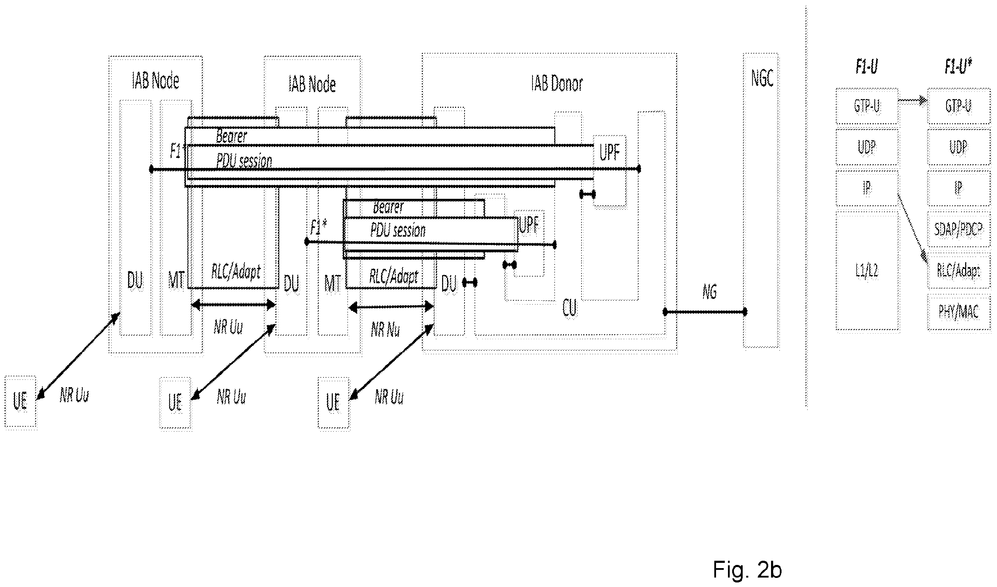

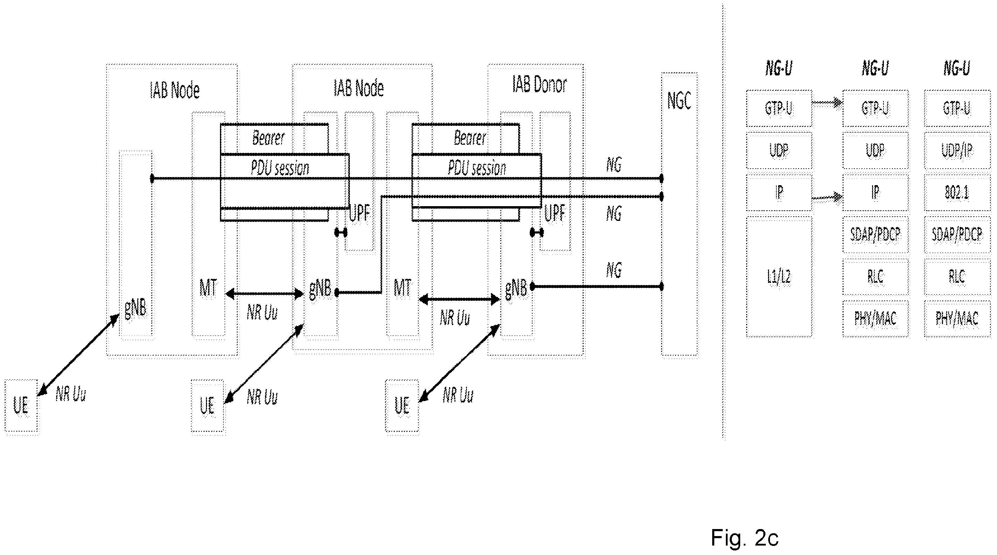

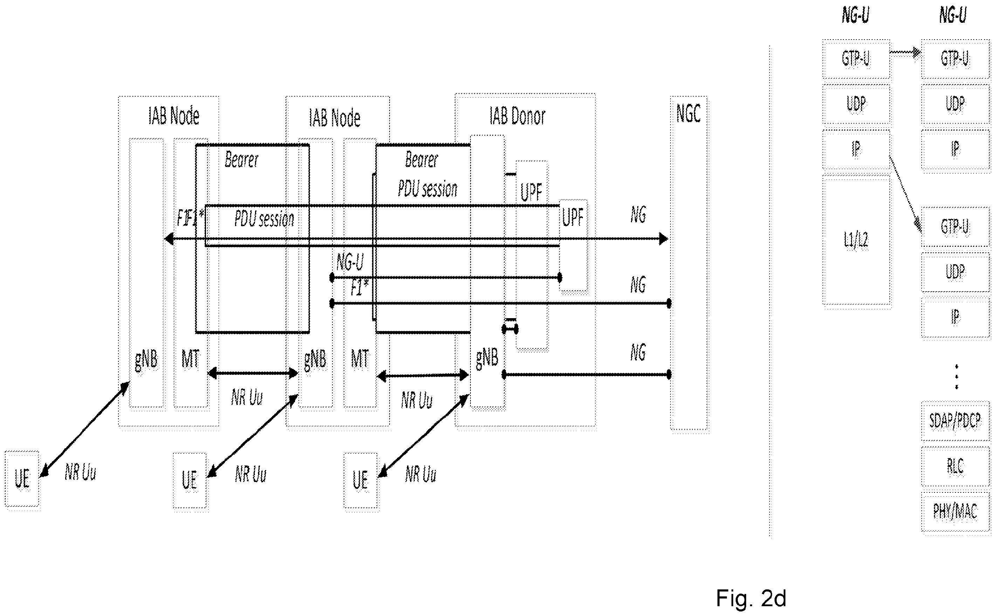

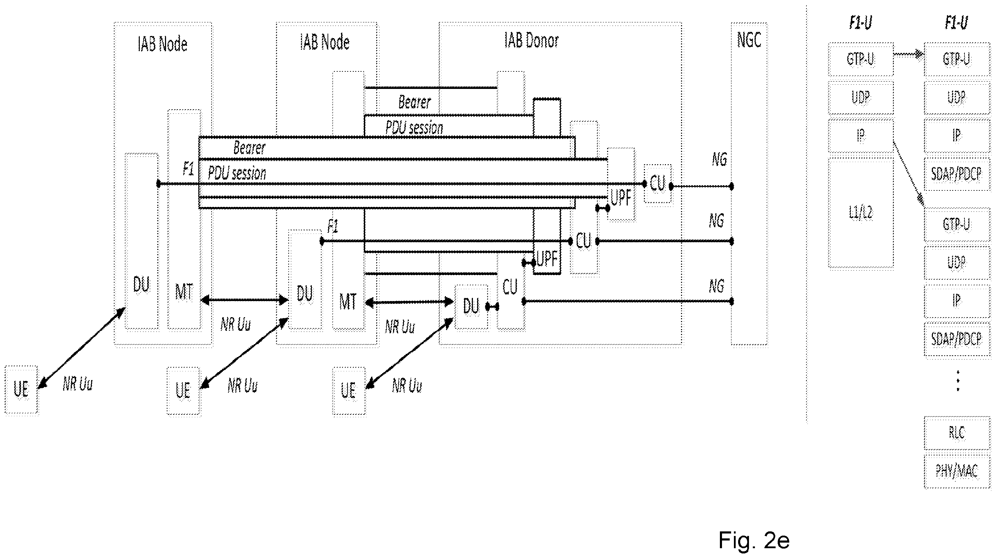

- Figs. 2: a-e are schematic overviews depicting different IAB architecture options;
- Fig. 3: is a schematic overview depicting a user plane protocol stack;
- Figs. 4: a-c are schematic overviews depicting control plane protocol stacks;
- Figs. 5: a-c are schematic overviews depicting example scenarios for backhaul-link failure;
- Figs. 6: a-b are schematic overviews depicting scenarios of backhaul RLF and recovery via an existing BH link;
- Fig. 7: is a schematic overview depicting scenarios of backhaul RLF and recovery via an existing BH link;
- Figs. 8: a-b are schematic overviews depicting scenarios of backhaul RLF and recovery via a newly established BH link;
- Fig. 9: is a schematic overview depicting scenarios of backhaul RLF and recovery via a newly established BH link;
- Figs. 10: a-b are schematic overviews depicting scenarios of backhaul RLF and recovery via a different established BH link;
- Fig. 11: is a schematic overview depicting scenarios of backhaul RLF and recovery via a different established BH link;
- Fig. 12: is a schematic overview depicting a topology with multiple IAB-node generations below BH RLF;
- Fig. 13: is a schematic overview depicting an example of a recovery after BH RLF in an IAB network.
- Fig. 14: is a schematic overview depicting an example of several descendant/child IAB nodes disconnected from an IAB-donor.

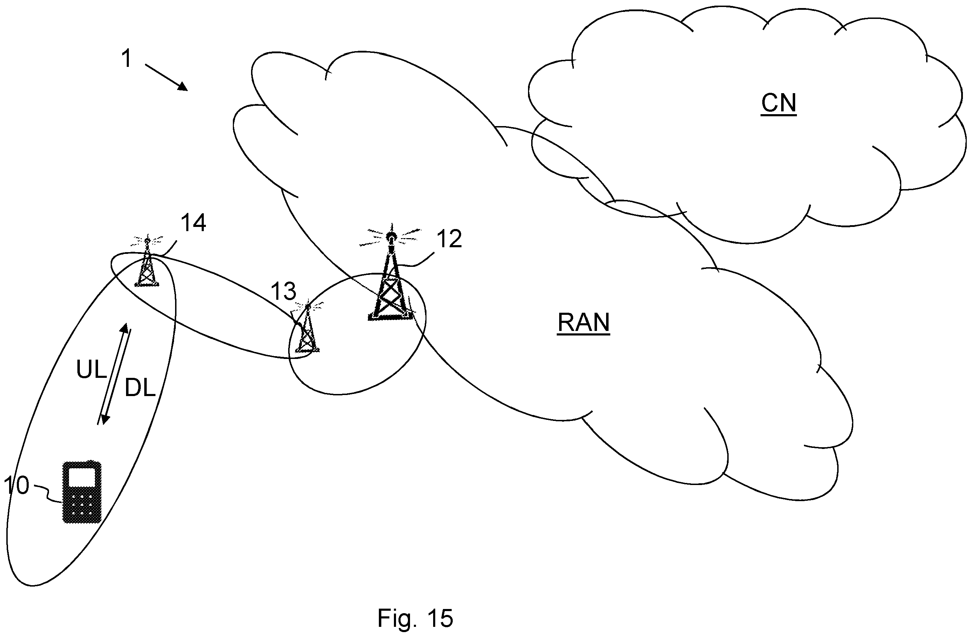

- Fig. 15: is a schematic overview depicting a wireless communications network according to embodiments herein;

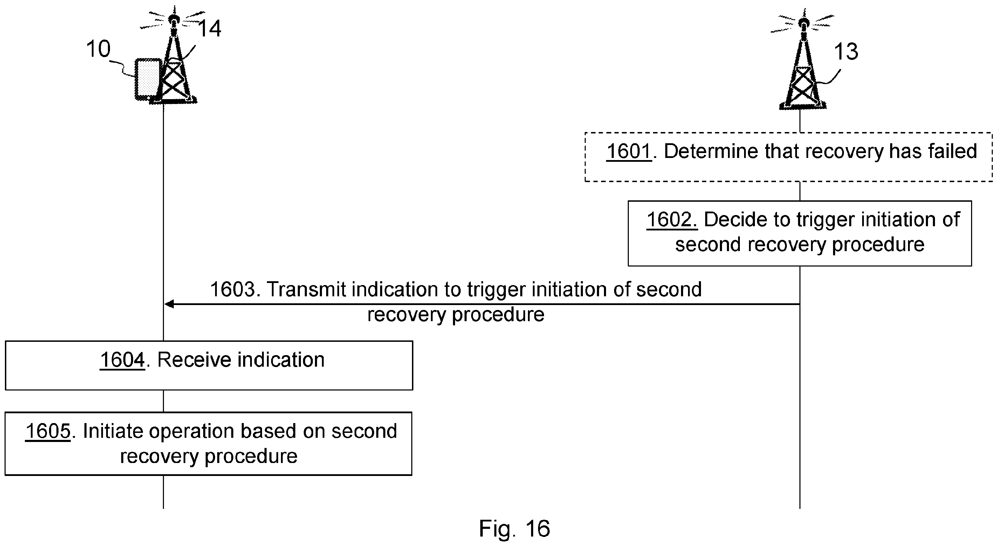

- Fig. 16: is a combined signalling scheme and flowchart according to some embodiments herein.

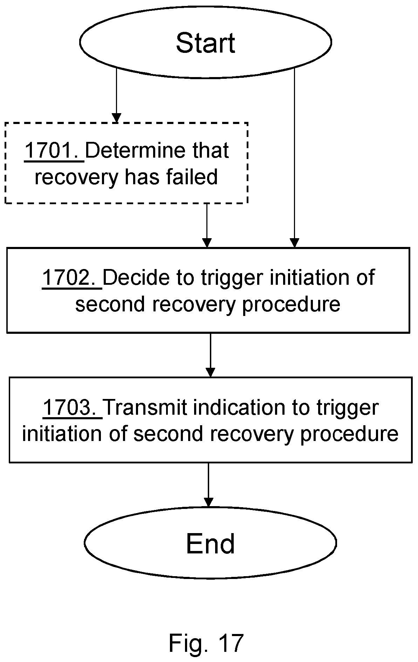

- Fig. 17: is a schematic flowchart depicting a method performed by a first radio network node according to embodiments herein;

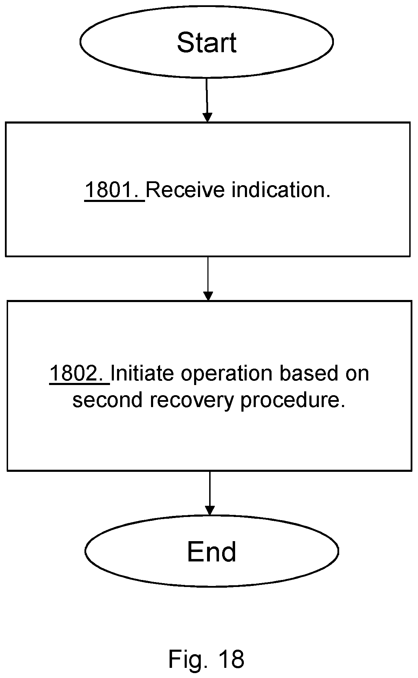

- Fig. 18: is a schematic flowchart depicting a method performed by a second radio network node or a wireless device according to embodiments herein;

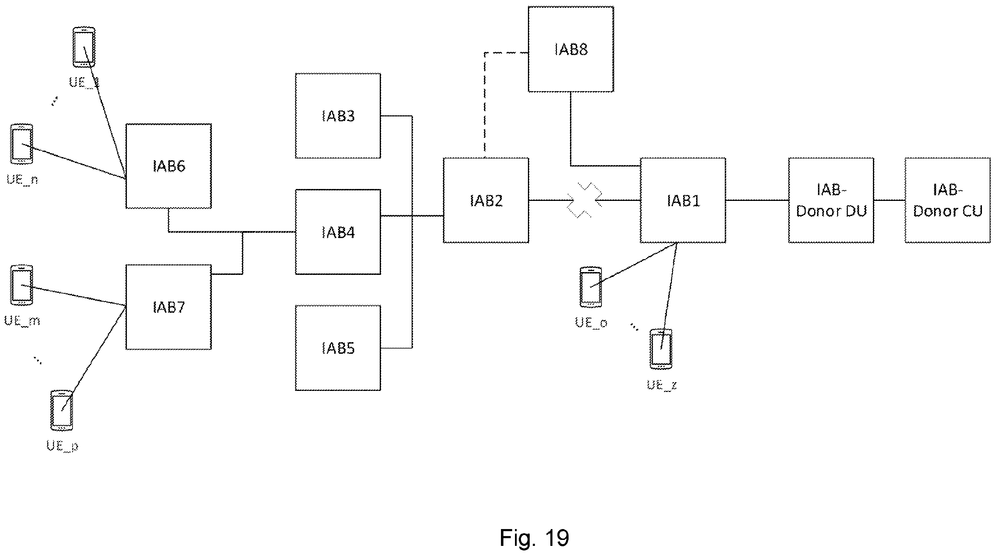

- Fig. 19: is a schematic overview depicting an example according to embodiments herein;

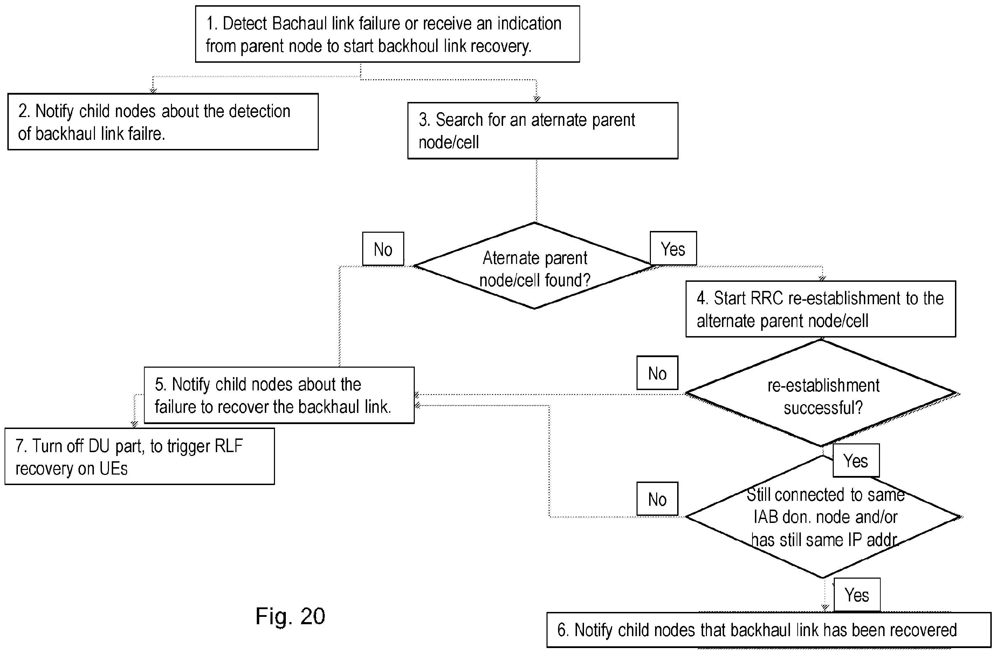

- Fig. 20: is a schematic overview depicting a backhaul link recovery procedure at an IAB node;

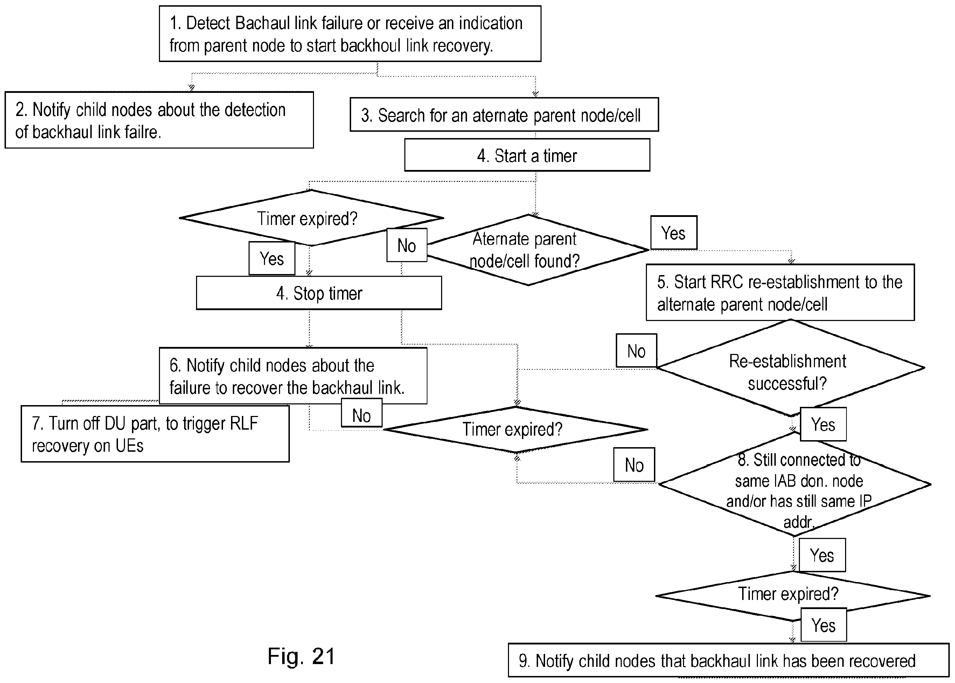

- Fig. 21: is a schematic overview depicting another backhaul link recovery procedure at an IAB node;

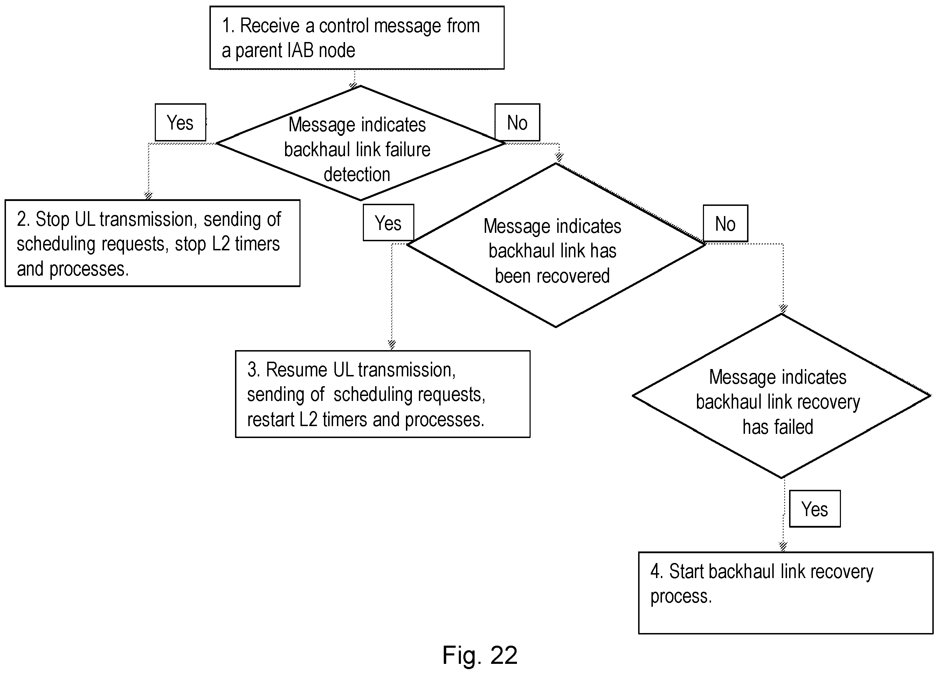

- Fig. 22: is a schematic overview depicting steps performed at an IAB node upon the reception of backhaul link status indication;

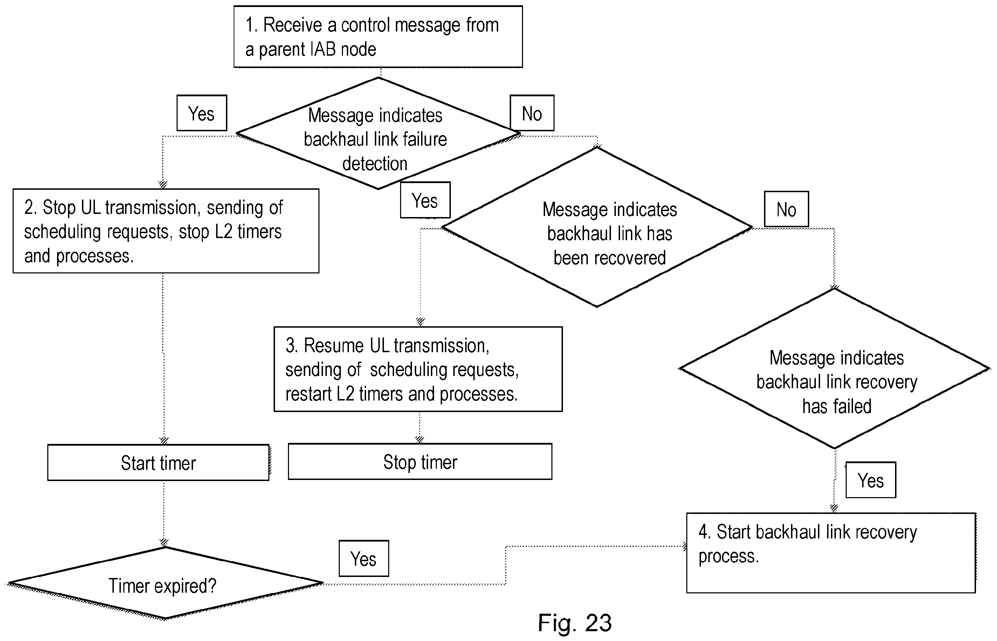

- Fig. 23: is a schematic overview depicting other steps performed at an IAB node upon the reception of backhaul link status indication;

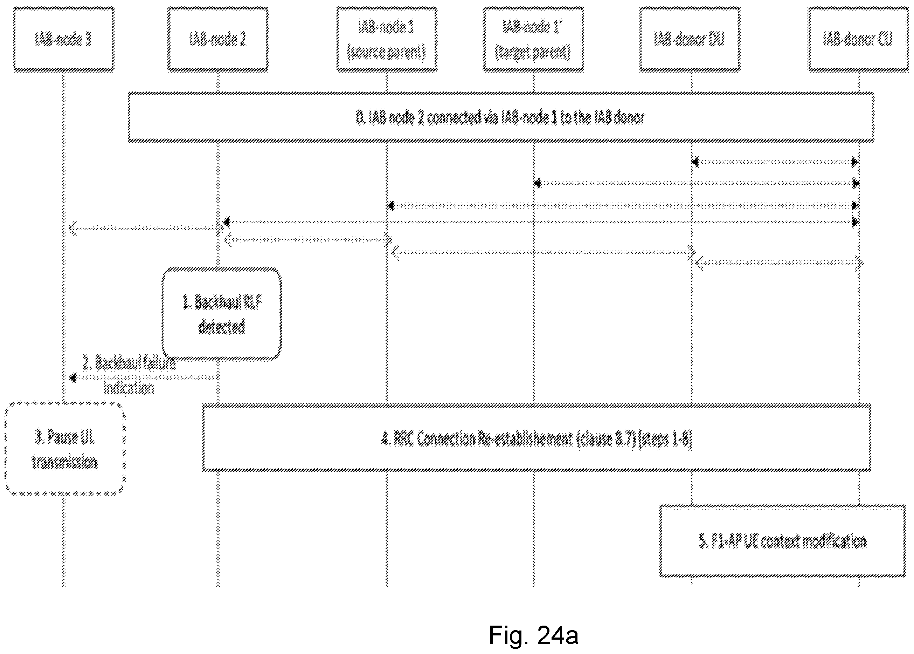

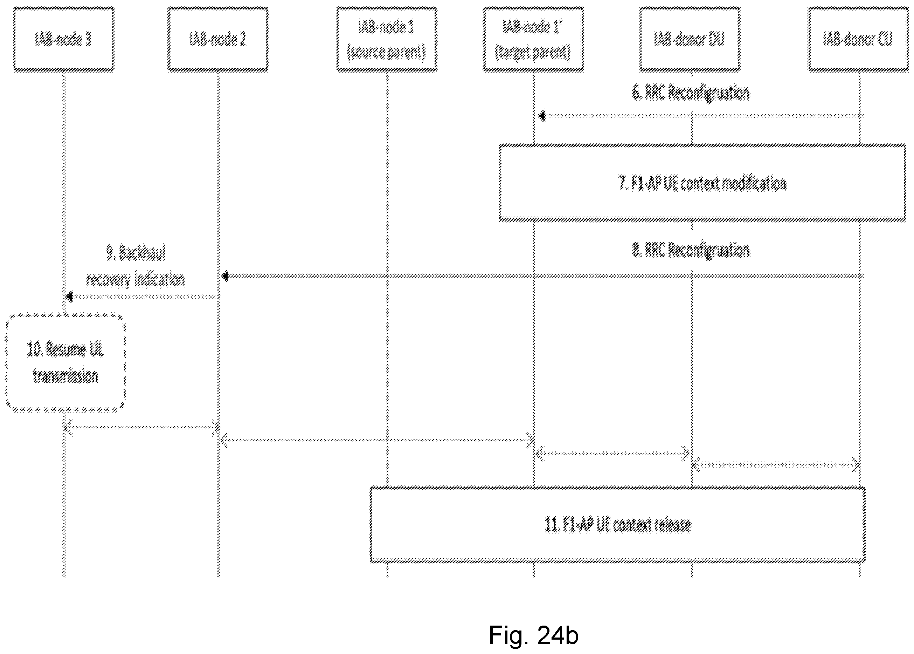

- Figs. 24: a and b are depict a combined signalling scheme and flowchart depicting a backhaul RLF recovery procedure in an IAB network;

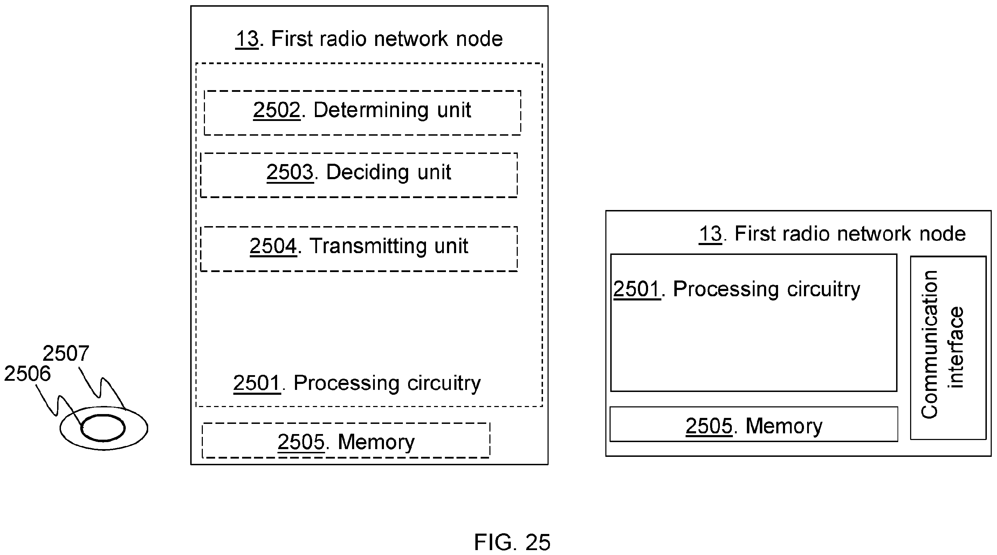

- Fig. 25: is a block diagram depicting a first radio network node according to embodiments herein;

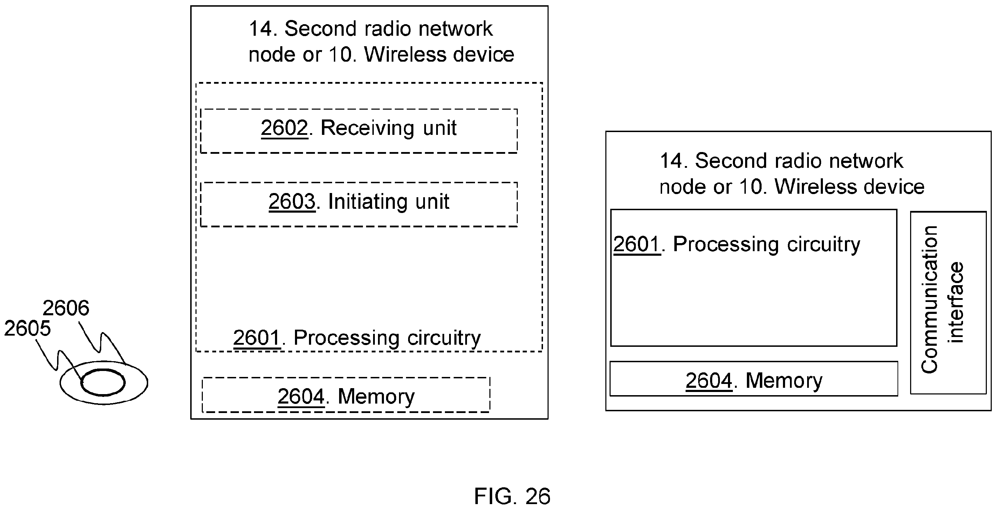

- Fig. 26: is a block diagram depicting a second radio network node or a wireless device according to embodiments herein;

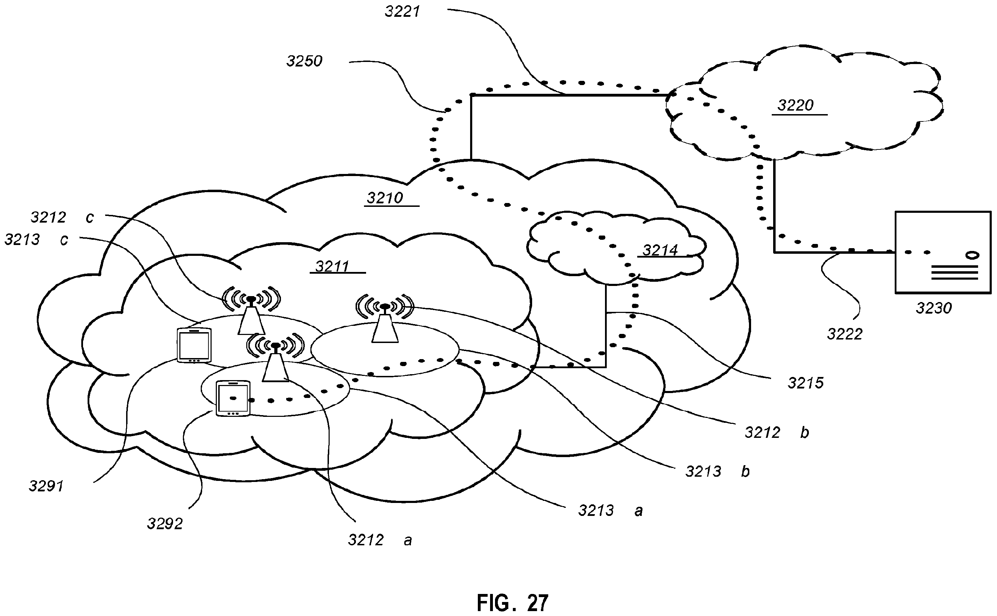

- Fig. 27: is a telecommunication network connected via an intermediate network to a host computer in accordance with some embodiments;

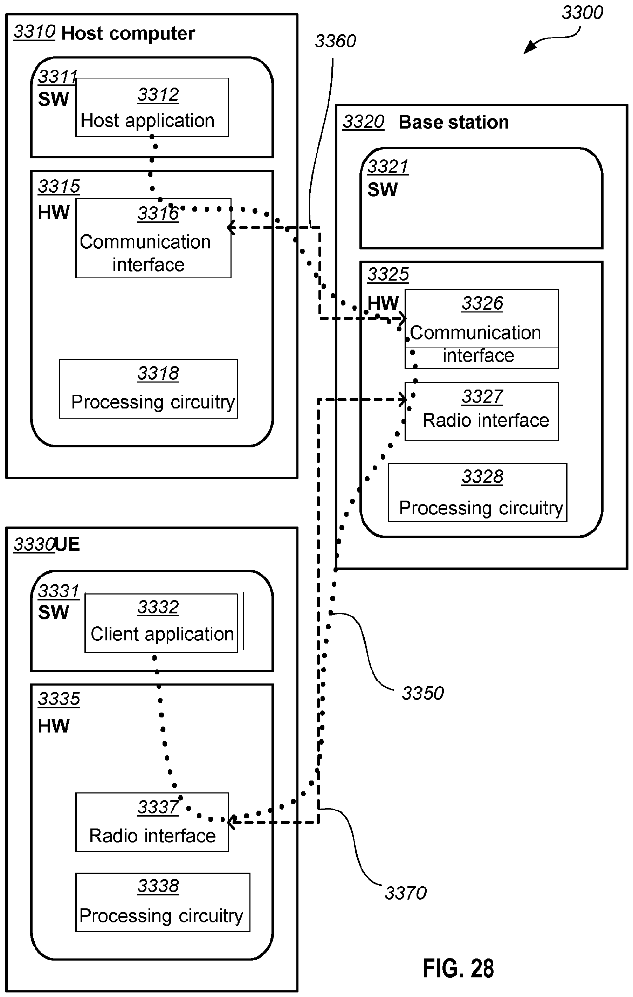

- Fig. 28: is a host computer communicating via a base station with a user equipment over a partially wireless connection in accordance with some embodiments;

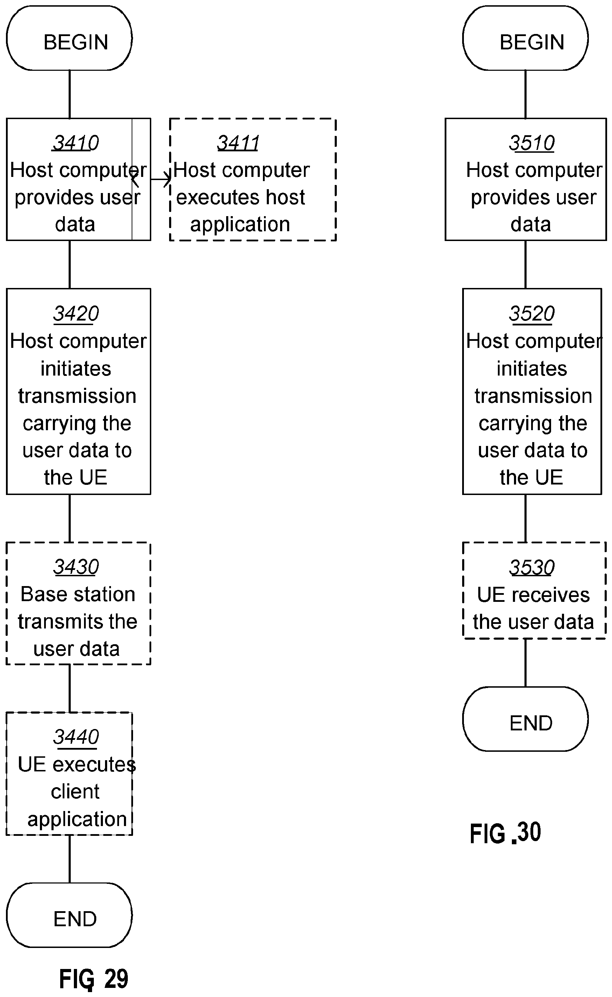

- Fig. 29: is methods implemented in a communication system including a host computer, a base station and a user equipment in accordance with some embodiments;
- Fig. 30: is methods implemented in a communication system including a host computer, a base station and a user equipment in accordance with some embodiments;

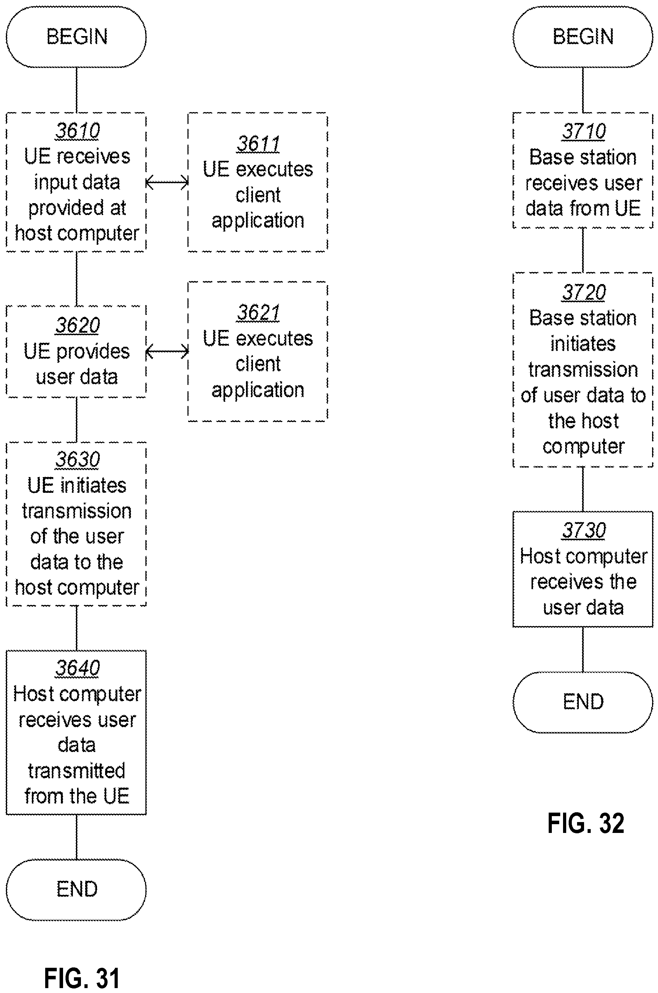

- Fig. 31: is methods implemented in a communication system including a host computer, a base station and a user equipment in accordance with some embodiments; and
- Fig. 32: is methods implemented in a communication system including a host computer, a base station and a user equipment in accordance with some embodiments.

The subject-matter of figures 1-19 and 21-32 and their descriptions, even if described or named as "embodiment(s)", "invention(s)", "aspect(s)", "example(s)" or "disclosure(s)" etc., does not fully and thus only partly correspond to the invention as defined in the claims, since one or more features present in and required by the independent claims are missing in the "embodiment(s)", "invention(s)", "aspect(s)", "example(s)" or "disclosure(s)" etc. The subject-matter of figures 1-19 and 21-32 and their descriptions is therefore not covered by the claims and is useful to highlight specific aspects of the claims.

### DETAILED DESCRIPTION

Embodiments herein relate to wireless communications networks in general. **Fig. 15** is a schematic overview depicting **a wireless communications network 1.** The wireless communications network 1 comprises one or more RANs and one or more CNs. The wireless communications network 1 may use one or a number of different technologies. Embodiments herein relate to recent technology trends that are of particular interest in a New Radio (NR) context, however, embodiments are also applicable in further development of existing wireless communications systems such as e.g. LTE or Wideband Code Division Multiple Access (WCDMA).

In the wireless communications network 1, a wireless device **10** such as a mobile station, a non-access point (non-AP) STA, a STA, a user equipment (UE) and/or a wireless terminal, is comprised communicating via e.g. one or more Access Networks (AN), e.g. RAN, to one or more core networks (CN). It should be understood by the skilled in the art that "wireless device" is a non-limiting term which means any terminal, wireless communications terminal, user equipment, NB-IoT device, Machine Type Communication (MTC) device, Device to Device (D2D) terminal, or node e.g. smart phone, laptop, mobile phone, sensor, relay, mobile tablets or even a small base station capable of communicating using radio communication with a radio network node within an area served by the radio network node.

The wireless communications network 1 comprises **a network node 12** such as a IAB-donor node e.g. baseband unit (BBU) such as an access node, an access controller, a base station, e.g. a radio base station such as a gNodeB (gNB), an evolved Node B (eNB, eNode B), a NodeB, a base transceiver station, a radio remote unit, an Access Point Base Station, a base station router, a Wireless Local Area Network (WLAN) access point or an Access Point Station (AP STA), a stand-alone access point or any other network unit or node capable of communicating with a wireless device within the area served by the radio network node depending e.g. on a first radio access technology and terminology used. It should be noted that a service area may be denoted as cell, beam, and beam group or similar to define an area of radio coverage.

The wireless communication network 1 further comprises **a first radio network node 13** connected in-between the network node 12 and the wireless device 10. The first radio network node 13 may be an IAB node e.g. a radio remote unit (RRU) such as an access node, antenna unit, radio unit of e.g. a radio base station such as a gNodeB (gNB), an evolved Node B (eNB, eNode B), a NodeB, a base transceiver station, a radio remote unit, an Access Point Base Station, a base station router, a Wireless Local Area Network (WLAN) access point or an Access Point Station (AP STA), a transmission arrangement of a radio base station, a stand-alone access point or any other network unit or node capable of communicating with a wireless device within the area served by the radio network node depending e.g. on a first radio access technology and terminology used. It should be noted that a service area may be denoted as cell, beam, and beam group or similar to define an area of radio coverage.

The wireless communication network further comprises **a second radio network node 14** connected in-between the network node 12 and the wireless device 10. The second radio network node 14 may be connected to the wireless device 10 directly and may be an egress point. The second radio network node 14 may be an IAB node e.g. a radio remote unit (RRU) such as an access node, antenna unit, radio unit of e.g. a radio base station such as a gNodeB (gNB), an evolved Node B (eNB, eNode B), a NodeB, a base transceiver station, a radio remote unit, an Access Point Base Station, a base station router, a Wireless Local Area Network (WLAN) access point or an Access Point Station (AP STA), a transmission arrangement of a radio base station, a stand-alone access point or any other network unit or node capable of communicating with a wireless device within the area served by the radio network node depending e.g. on a first radio access technology and terminology used. It should be noted that a service area may be denoted as cell, beam, beam group or similar to define an area of radio coverage.

Embodiments herein disclose a solution wherein an IAB node, e.g. the first radio network node 13, is performing an RRC re-establishment procedure, e.g. a first recovery procedure, due to a link failure and depending on the outcome of that procedure determine that the recovery procedure has failed and that any UEs, e.g. wireless device 10, and children IAB nodes, e.g. the second radio network node 14, connected to the first radio network node 13, should initiate recovery by themselves. In this case the first radio network node 13 may also release the context stored in the first radio network node 13 related to the wireless device and one or more second radio network nodes 14.

Thus, the first radio network node 13 decides upon a failure of a first recovery procedure of a connection or loss of the connection at the first radio network node 13, to trigger an initiation of a second recovery procedure of a second connection at a second radio network node 14 and/or the wireless device 10. Furthermore, the first radio network node 13 transmits to the second radio network node 14 and/or the wireless device 10, an indication for triggering the initiation of the second recovery procedure of the second connection.

**Fig. 16** is a combined signalling scheme and flowchart according to some embodiments herein. This figure shows the method in the involved nodes, the first radio network node, the wireless device 10 and the second radio network node 14.

**Action 1601.** The first radio network node 13, such as an IAB node, an intermediate IAB node or a relay node, may perform a first recovery procedure, such as an RRC re-establishment procedure, e.g. due to a link failure. Depending on the outcome of the first recovery procedure, the first radio network node 13 may determine that the first recovery procedure has failed and that any wireless device 10 and second radio network node 14, such as a child IAB node, connected to the first radio network node 13, should initiate recovery by themselves. This is related to Action 1701 described below.

**Action 1602.** Upon a failure of the first recovery procedure of the connection at the first radio network node 13, the second radio network node 14 and/or the wireless device 10 should initiate recovery by themselves. Thus, the first radio network node 13 decides to trigger an initiation of a second recovery procedure at the second radio network node 14 and/or the wireless device 10. The second radio network node 14 and the wireless device 10 may be children IAB nodes and UEs, respectively, which may be connected to the first radio network node 13. In this case the first radio network node 13, may also release the context stored in the IAB node, e.g. the first radio network node 13, related to the wireless device 10, and second radio network nodes 14. The first radio network node may further e.g. select second radio network nodes and/or wireless devices for initiating the second recovery procedure. This is related to Action 1702 described below.

**Action 1603.** The first radio network node 13 therefore transmits to the second radio network node 14 and/or the wireless device 10, an indication for triggering the initiation of the second recovery procedure of the second connection. In some embodiments this is performed upon loss of the connection e.g. decided and transmitted an indication indicating that the first radio network node 13 performs the first recovery procedure. The indication may thus be associated with triggering the second recovery procedure being e.g. informing about the first recovery procedure performed at the first radio network node 13.

When the indication indicates that the connection at the first radio network node 13 has been lost, the second recovery procedure may comprise an explicit control message e.g. at PHY, MAC, RLC, IAB adaptation layer or an implicit message, e.g. that the first radio network node 13 switches off downlink transmissions, including pilot signals, reference signals and broadcast signals.

When the indication indicates that that the first radio network node 13 has initiated the first recovery procedure e.g. due to a link failure, the second radio network node 14 and/or the wireless device 10 may initiate a timer for monitoring the progress of the first recovery procedure.

The indication may also indicate that the first recovery procedure has succeeded. Then the first radio network node 13 checks to see if it is still connected to the same network node, e.g. IAB donor, or that it is still using the same IP address. If so, i.e. if first recovery procedure has succeeded, the first radio network node 13 notifies the second radio network node 14 and/or the wireless device 10 that the backhaul link has been recovered. In this case, no second recovery procedure is needed. This is related to Action 1703 described below.

**Action 1604.** The second radio network node 14 and/or the wireless device 10, receives, from the first radio network node 13, the indication for triggering an initiation of a second recovery procedure of the second connection. This is related to Action 1801 described below.

**Action 1605.** Depending on the received indication, the second radio network node 14 and/or the wireless device 10, initiates an appropriate operation associated to the second recovery procedure of the second connection. The initiation of the operation may be, e.g. to start a timer to monitor the progress of the first recovery procedure or to initiate the second recovery procedure of the second connection. It may also be that the second recovery procedure does not need to be performed. Furthermore, the second recovery procedure may also be performed upon the timer expiring without receiving a confirmation of success of the first recovery procedure.

The method actions performed by the first radio network node 13 for handling data packets or handling communication in a wireless communications network 1 according to embodiments herein will now be described with reference to a flowchart depicted in **Fig. 17****.** This figure thus shows the method as seen from the perspective of the first radio network node 13. The first radio network node 13, may be a relay node and may also denoted as an IAB node. The wireless communications network 1 comprises the first radio network node 13 relaying data packets between a network node and a wireless device 10. The actions do not have to be taken in the order stated below, but may be taken in any suitable order.

**Action 1701.** The first radio network node 13 may determine that a first recovery procedure has failed. This is related to Action 1601 described above.

**Action 1702.** The first radio network node 13 decides to trigger an initiation of a second recovery procedure of a second connection at a second radio network node 14 and/or the wireless device 10. This is decided upon a failure of the first recovery procedure of a connection or upon loss of the connection at the first radio network node 13. This is related to Action 1602 described above.

**Action 1703.** The first radio network node 13 transmits to the second radio network node 14 and/or the wireless device 10, an indication for triggering the initiation of the second recovery procedure of the second connection. This is related to Action 1603 described above.

The method actions performed by the second radio network node 14 or the wireless device 10 for handling data packets or handling communication in a wireless communications network 1 according to embodiments herein will now be described with reference to a flowchart depicted in **Fig. 18****.** This figure shows the method as seen from the wireless device 10 and/or the second radio network node 14 perspective. As mentioned above, the wireless communications network 1 comprises the first radio network node 13 and/or the second radio network node 14 relaying data packets between a network node and the wireless device 10. The actions do not have to be taken in the order stated below, but may be taken in any suitable order.

**Action 1801.** The second radio network node 14 and/or the wireless device 10, receives, from the first radio network node 13, an indication for triggering an initiation of a second recovery procedure of a second connection. This is related to Action 1604 described above.

**Action 1802.** Depending on the received indication, the second radio network node 14 and/or the wireless device 10 initiates an operation associated to the second recovery procedure of the second connection. This is related to Action 1605 described above.

The example scenario shown in **Fig. 19** is used to illustrate the concepts of embodiments herein. In this example scenario, the node that has experienced backhaul failure is IAB2. In this example scenario, the first radio network node 13 is represented the **IAB2** node. The second radio network node 14 may be represented by any of the nodes ... **IAB donor DU** = **12, IAB1** = **13, IAB2** = **15, IAB3/4/5** = **16/17/18, IAB6/7** = **14/14'.** The wireless device 10 is represented by the **UE _o**.

Fig. 19 depicts an example scenario of several descendant/child IAB nodes disconnected from IAB-donor, e.g. Node A1 as described above.

**Fig. 20** shows steps performed at an IAB node upon backhaul link failure recovery, according to some embodiments herein. Fig. 20 depicts a Backhaul link recovery procedure at an IAB node such as the first radio network node 13.

The procedure may comprise the following steps:
**1.** The IAB node, e.g. the first radio network node 13, starts a backhaul link failure recovery on the detection of RLF on the backhaul link, e.g. using legacy UE RLF detection mechanisms or when it receives an indication from a parent node to start a backhaul link failure recovery procedure.
**2.** The IAB node, e.g. the first radio network node 13, notifies its children node, e.g. the second radio network node 14, that it has experienced a backhaul link failure and is trying to recover from it. Optionally, this indication may include additional information, e.g. timer value for the child, e.g. second radio network node 14, which is used as the time the child waits for the parent, e.g. the first radio network node 13, to recover from the backhaul link.
**3.** The IAB node, the IAB node, e.g. the first radio network node 13, starts searching for an alternate parent node/cell to re-establish its connection to.
   NOTE: steps 2 and 3 may be performed in parallel.
**4.** If an alternate node/cell is found, the IAB node, e.g. the first radio network node 13, starts a recovery procedure, e.g. the first recovery procedure such as an RRC re-establishment procedure. If not, the IAB node notifies the child nodes, e.g. second radio network nodes 14, that it has not managed to recover the backhaul link and they have to start a backhaul link recovery failure procedure themselves, i.e. the child nodes will go to step 1 and start performing the recovery procedure.
**5.** If the re-establishment procedure does not succeed, the IAB node, e.g. the first radio network node 13, notifies the child nodes that it has not managed to recover the backhaul link and they have to start a backhaul link recovery failure procedure themselves. "Re-establishment procedure does not succeed" could include the following cases:
   a. The IAB node receives an RRC re-establishment failure message.
   b. The IAB node receives an RRC re-establishment failure message, and the attempted NAS, e.g. Core network level, recovery fails.
   c. The IAB node receives an RRC re-establishment failure message, and the attempted NAS, e.g. Core network level, takes too long time.
**6.** If the re-establishment procedure has succeeded, e.g. the RRC reestablishment procedure succeeded, or the NAS recovery succeeded, the IAB node, e.g. the first radio network node 13, checks to see if it is still connected to the same donor, or that it is still using the same IP address. If so, the IAB node notifies the child nodes that the backhaul link have been recovered. Otherwise, the IAB node notifies the child nodes that it has not managed to recover the backhaul link and they have to start a backhaul link recovery failure procedure themselves. A procedure that may be used to check if the IAB node is connected to the same donor, e.g. network node, and/or IP address may include:
   a. Perform some IP address related signalling to check if the IP address is still valid. This may include sending a DHCP message, e.g. DHCP discover, or IPv6 host advertisement, or some other signalling, e.g. RRC, or F1 signalling. Or receiving an indication from a network node that the IP address is not valid.
   b. Check if the IAB has connectivity with the donor could include sending or receiving a F1 message, or sending or receiving a SCTP message (e.g. SCTP heart beat).
   c. Or receiving a message (e.g. RRC, F1, DHCP) from a network node indicating than a new IP address or F1 connection has been allocated.

Embodiments herein disclose e.g. when and how the first radio network node 13 detects a failure to recover the backhaul link and sends the corresponding indication.

**Fig. 21** shows the steps performed at an IAB node, e.g. first radio network node 13, upon backhaul link failure recovery, according to some embodiments herein, where a timer is also employed to control the backhaul recovery procedure. Fig. 21 depicts an backhaul link recovery procedure at an IAB node.

The procedure may comprise the following steps:
**1.** The IAB node, e.g. the first radio network node 13, starts a backhaul link failure recovery on the detection of RLF on the backhaul link, e.g. using legacy UE RLF detection mechanisms, or when it receives an indication from a parent node to start a backhaul link failure recovery procedure.
**2.** The IAB node, e.g. the first radio network node 13, notifies its children nodes that it has experienced a backhaul link failure and is trying to recover from it.
**3.** The IAB node, e.g. the first radio network node 13, starts searching for an alternate parent node/cell to re-establish its connection to.
   NOTE: steps 2 and 3 can be performed in parallel.
**4.** The IAB node, e.g. the first radio network node 13, starts a timer, the value of which may be, e.g. previously configured value by the donor node, a value hardcoded in the standards or a value depending on the IAB node implementation. When/if the timer expires, the IAB node notifies the child nodes that it has not managed to recover the backhaul link and that they have to start a backhaul link recovery failure procedure themselves.
**5.** If an alternate node/cell is found, the IAB node, e.g. the first radio network node 13, starts the RRC re-establishment procedure, e.g. recovery procedure. If not, and the timer is still running, i.e. IAB node has not already notified its child nodes that it has not managed to recover the backhaul link due to timer expiration, it will notify its child nodes that it has not managed to recover the backhaul link and they have to start a backhaul link recovery failure procedure themselves, i.e. the child nodes will go to step 1 and start performing the recovery procedure.
**6.** If the re-establishment procedure does not succeed, and the timer is still running, the IAB node notifies the child nodes that it has not managed to recover the backhaul link and they have to start a backhaul link recovery failure procedure themselves.
   a. Alternatively, the IAB node may continue to perform NAS recovery and only notify the children nodes if the timer times out.
**7.** The IAB node, e.g. the first radio network node 13, may then turn off DU part, to trigger RLF recovery on UEs
**8.** If the re-establishment procedure has succeeded, the IAB node, e.g. the first radio network node 13, checks to see if it is still connected to the same donor, or that it is still using the same IP address, using the procedure described in Fig. 20.
**9.** If so, and the timer has not expired, i.e. the failure to recover the link has not been communicated due to timer expiration, the IAB node, e.g. the first radio network node 13, notifies the child nodes that the backhaul link have been recovered. Otherwise, i.e. IAB node now connected to another donor or it has another IP address, and the timer has not expired, the IAB node, e.g. the first radio network node 13, notifies (6.) the child nodes that it has not managed to recover the backhaul link and they have to start a backhaul link recovery failure procedure themselves.

NOTE: In the above procedures, the check for timer expiration in steps 5, 6 and 7 may be optional, i.e. the notification to the children node may be sent regardless of the timer status.

It is herein disclosed when and how the IAB node detects a failure to recover the backhaul link and sends the corresponding indication, and also the introduction of a timer used by the IAB node to.

**Fig. 22** shows the steps performed at an IAB node, e.g. the first radio network node 13, upon receiving a control message from a parent node regarding the parent's backhaul link connectivity to the donor, according to some embodiments herein.

Fig. 22 depicts steps at an IAB node upon the reception of backhaul link status indication from a parent. The procedure may comprise the following steps:
**1.** The IAB node, e.g. the first radio network node 13, receives a control message from its parent regarding the parent's backhaul link connectivity to the donor
**2.** If the message indicates the detection of a backhaul link failure of the parent node, the IAB node, e.g. the first radio network node 13, stops UL transmission, the sending of scheduling request and stop L2 timers and processes to make sure that data loss will not happen.
**3.** If the message indicates the recovery of a backhaul link of the parent node, the IAB node, e.g. the first radio network node 13, resumes normal operation, i.e. resumes UL transmission, the sending of scheduling request and restart L2 timers and processes.
**4.** If the message indicates the recovery of a backhaul link of the parent node has failed, the IAB node, e.g. the first radio network node 13, starts a backhaul link recovery failure procedure itself, according to either procedure described in Fig. 20 or Fig. 21 above.

**Fig. 23** shows the steps performed at an IAB node upon receiving a control message from a parent node regarding the parent's backhaul link connectivity to the donor, according to some embodiments herein.

Figure 23 shows steps at an IAB node upon the reception of backhaul link status indication from a parent.

The procedure may comprise the following steps:
**1.** The IAB node, e.g. the first radio network node 13, receives a control message from its parent regarding the parent's backhaul link connectivity to the donor.
**2.** If the message indicates the detection of a backhaul link failure of the parent node, the IAB node, e.g. the first radio network node 13, stops UL transmission, the sending of scheduling request and stop L2 timers and processes to make sure that data loss will not happen. The IAB node also starts a timer, the value of which may be, e.g. a previously configured value by the donor node, a value hardcoded in the standards or a value depending on the IAB node implementation. It may also be that the timer value is included in the failure indication message received from the parent. When/if the timer expires, the IAB node considers that the parent has failed to recover the backhaul link (see step 4).
**3.** If the message indicates the recovery of a backhaul link of the parent node, the IAB node, e.g. the first radio network node 13, resumes normal operation, i.e. resumes UL transmission, the sending of scheduling request and restart L2 timers and processes. Also, if a timer was started upon a reception of the first type of indication notifying the detection of a backhaul failure by the parent, the timer is stopped.
**4.** If the message indicates the recovery of a backhaul link of the parent node has failed, of the timer started upon the reception of the first type of indication notifying the detection of a backhaul failure by the parent, the IAB node, e.g. the first radio network node 13, starts a backhaul link recovery failure procedure itself (according to either procedure described in Fig. 20 or Fig. 21 above).

Embodiments herein disclose usage of a timer in step 2 and 3. The advantage with the timer is that it allows the children IAB node to initiate recovery in case the parent IAB node is not able to do this in time. In this way the service interruption can be minimized. Also, the timer value may be different for the different children nodes (e.g. different timers included in the indication sent by the parent), so that the different children can start searching for an alternate parent at different times. This way, one can prevent all the child nodes trying to reconnect to another parent and overwhelm the system with signaling overload. Also, if a child IAB node is at the moment being used to relay only low priority (e.g. best effort) bearers, while another child IAB node is being used to relay very high priority data (e.g. very strict latency requirements), it will be optimal if the latter child tries to reconnect to another parent while the former child can wait for more time for the parent to recover the connection.

The backhaul recovery procedure, where the IAB node that has a failed backhaul link manages to re-establish a connection with another IAB node that is also connected to the same IAB donor is shown in **Fig. 24a** **and b.**

Figures 24a depicts steps 1-5 and Figure 24b depicts steps 6-11 of a backhaul RLF recovery procedure in an IAB network, successful case.

The procedure may comprise the following steps:
**0.** The IAB-node 2, is connected via IAB node 1 to the IAB donor.
**1.** The IAB node, e.g. IAB-node 2, detects a backhaul RLF. This may also be triggered by the reception of an indication from a parent node to the parent node that has experienced a backhaul failure and was not able to recover the link.
**2.** The IAB node, e.g. IAB-node 2, may inform its children IAB nodes, e.g. IAB-node 3, that it has experienced backhaul RLF and it has started link recovery procedure.
**3.** The child IAB node, e.g. IAB-node 3, may pause UL transmission towards the parent. This may include stopping the transmission on any already available UL grants, e.g. which were configured via configured grants, the sending of scheduling requests and may stop any protocol timers or processes that may lead to loss of data.
**4.** The IAB node, e.g. IAB-node 2, initiates the RRC connection re-establishes procedure, according to subclause 8.7 of TS 38.401, and steps 1-8 are performed, e.g. until the reception of the F1-AP RRC Message Transfer message at the IAB-donor-CU that includes the RRCReestablishmentComplete message from the UE.
**5.** The IAB-donor CU initiates an F1-AP UE context modification procedure towards the IAB-donor DU to configure the new forwarding/mapping information to use for forwarding UP and CP data towards the IAB-node, e.g. IAB-node 2 and may optionally setup/modify backhaul RLC channels between IAB-donor DU and the new parent, e.g. IAB-node 1'.
**6.** The IAB-donor CU may initiate an RRC reconfiguration procedure towards the new parent node, e.g. IAB-node 1', in case some backhaul RLC channels have to be reconfigured or added to enable IAB-node 1' to serve as a parent of the IAB-node, e.g. IAB-node 2.
   NOTE: Steps 5 and 6 may be performed for any intermediate IAB-node between the IAB-donor DU and the new parent node.
**7.** The IAB-donor CU initiates an F1-AP UE context modification procedure towards the new parent, e.g. IAB-node 1', to setup backhaul RLC channels and to configure the new forwarding/mapping information to use for forwarding UP and CP data towards the IAB-node, e.g. IAB-node 2.
**8.** The IAB-donor CU initiates an RRC reconfiguration procedure towards the IAB node, e.g. IAB-node 2, to setup the needed backhaul RLC channels towards the new parent, e.g. IAB-node 1'.
**9.** The IAB node, e.g. IAB-node 2 may inform its children nodes that the backhaul link has recovered.
**10.** The child IAB node, e.g. IAB-node 3, resumes normal UL transmission operation. This includes restarting the transmission on any already available UL grants, e.g. which were configured via configured grants, the sending of scheduling requests and resuming the usage of all protocol timers or processes that were stopped during step 4.
**11.** The IAB donor-CU initiates the F1-AP UE context release procedure to release the F1 context of the IAB node, e.g. IAB-node 2, at the old parent node, e.g. IAB-node 1.

Note that the above steps are included for illustrative purposes.

Embodiments herein provide different mechanisms for recovering backhaul link failures in multi-hop IAB networks.

Briefly described, the provided mechanisms comprise:
- An IAB node, e.g. the first radio network node 13, performing an RRC reestablishment procedure, or recovery procedure, due to a link failure and depending on the outcome of that procedure determine that the recovery procedure has failed and that any UEs and children IAB nodes connected to the IAB node should initiate recovery by themselves. In this case the IAB node e.g. the first radio network node 13, may also release the context stored in the IAB node related to the UEs and children IAB nodes.
- Example of cases when the IAB node, e.g. first radio network node 13, determines that UEs, e.g. one or more wireless devices 10, and children IAB nodes, e.g. second radio network nodes 14, connected to the IAB node should initiate recovery by themselves include:
   o When a timer expires in the IAB node performing the recovery, e.g. IAB node A, and the IAB backhaul connection has not yet been recovered. In this case, for performance reasons, it may be better if the connected UEs and children IAB nodes attempt recovery by themselves.
   o When the IAB node A receives an indication that the RRC reestablishment procedure has failed. In this case it is unlikely that the IAB node will recover the old F1 connection and the associated contexts related to connected UEs and children IAB nodes will be lost.
   o When the IAB node A receives an indication that the IP address that it was assigned to prior to the link failure, is no longer valid. Similar as described above, it is unlikely that the old F1 connection will be recovered.
   ∘ When the IAB node A receives an indication that the F1 connection, e.g. F1-AP, or associated SCTP connection, has been re-established, or lost.
   ∘ When the F1 UE context associated with the UEs or children IAB nodes have been lost, or released, e.g. by the CU-CP.
- When determined that the UEs, e.g. wireless devices 10, and children IAB nodes, e.g. second radio network nodes 14, connected to the IAB node, e.g. first radio network node 13, should initiate recovery by themselves, the IAB node A may send an indication to the UEs and children IAB nodes indicating that the connection has been lost, i.e. transmit an indication to trigger an initiation of a second recovery procedure.

The indication may comprise any one out of:
o An explicit control message e.g. at PHY, MAC, RLC, IAB adaptation layer.
∘ An implicit action, e.g. that the IAB node switches off downlink transmissions, incl. pilot signals, reference signals and broadcast signals. Causing the connection node to detect link failure and initiate their own recovery.
   - As an extra measure the IAB node A could send an indication to the connected IAB nodes or UEs indicating that the IAB node has lost the link and initiated recovery. In this way the connected nodes, e.g. the wireless device 10 and/or the second radio network node 14, may start a timer to monitor the progress of the recovery.
∘ When IAB node A succeeds with the recovery it may send a "connection recovery" indication of this to the connected node, e.g. the wireless device 10 and/or the second radio network node 14.
o If the timer expires prior to that the connected node receives any "connection recovery" indication the connected node, e.g. the wireless device 10 and/or the second radio network node 14, may by themselves initiate recovery, e.g. a second recovery procedure.

Fig. 25 is a block diagram depicting the first radio network node 13, such as a relay node also denoted as an IAB node, for handling data packets or handling communication in a wireless communications network 1 according to embodiments herein.

The first radio network node 131 may comprise processing circuitry 2501, e.g. one or more processors, configured to perform the methods herein.

The first radio network node 13 may comprise a determining unit 2502. The first radio network node 13, the processing circuitry 2501, and/or the determining unit 2502 may be configured to determine that the first recovery procedure has failed.

The first radio network node 13 may comprise a deciding unit 2503. The first radio network node 13, the processing circuitry 2501, and/or the deciding unit 2503 is configured to decide upon the failure of the first recovery procedure of the connection or upon loss of the connection at the first radio network node 13, to trigger the initiation of the second recovery procedure of the second connection at the second radio network node 14 and/or the wireless device 10.

The first radio network node 13 may comprise a transmitting unit 2504. The first radio network node 13, the processing circuitry 2501, and/or the transmitting unit 2504 is configured to transmit to the second radio network node 14 and/or the wireless device 10, the indication for triggering the initiation of the second recovery procedure of the second connection.

The first radio network node 13 further comprises a memory 2505. The memory 2505 comprises one or more units to be used to store data on, such as data packets, events and applications to perform the methods disclosed herein when being executed, and similar. Furthermore, the first radio network node 13 may comprise a communication interface such as comprising a transmitter, a receiver and/or a transceiver and/or one or more antennas.

The methods according to the embodiments described herein for the first radio network node 13 are respectively implemented by means of e.g. **a computer program product 2506** or a computer program, comprising instructions, i.e., software code portions, which, when executed on at least one processor, cause the at least one processor to carry out the actions described herein, as performed by the first radio network node 13. The computer program product 2506 may be stored on **a computer-readable storage medium 2507,** e.g. a disc, a universal serial bus (USB) stick or similar. The computer-readable storage medium 2507, having stored there on the computer program product, may comprise the instructions which, when executed on at least one processor, cause the at least one processor to carry out the actions described herein, as performed by the first radio network node 13. In some embodiments, the computer-readable storage medium may be a transitory or a non-transitory computer-readable storage medium. Thus, embodiments herein may disclose a first radio network node for handling communication in a wireless communications network, wherein the first radio network node comprises processing circuitry and a memory, said memory comprising instructions executable by said processing circuitry whereby said first radio network node is operative to to perform any of the methods herein.

**Fig. 26** is a block diagram depicting the second radio network node 14, such as a relay node also denoted as an IAB node, or the wireless device 10, for handling data packets or handling communication in a wireless communications network 1 according to embodiments herein.

The second radio network node 14 and/or the wireless device 10 may comprise **processing circuitry 2601,** e.g. one or more processors, configured to perform the methods herein.

The second radio network node 14 and/or the wireless device 10 may comprise **a receiving unit 2602.** The second radio network node 14 and/or the wireless device 10, the processing circuitry 2601, and/or the receiving unit 2602 is configured to receive, from the first radio network node 13, the indication for triggering an initiation of a second recovery procedure of the second connection.

The second radio network node 14 and/or the wireless device 10 may comprise **an initiating unit 2603.** The second radio network node 14 and/or the wireless device 10, the processing circuitry 2601, and/or the initiating unit 2603 is configured to initiate the operation associated to the second recovery procedure of the second connection.

The second radio network node 14 and/or the wireless device 10 further comprises **a memory 2604.** The memory 2604 comprises one or more units to be used to store data on, such as data packets, events and applications to perform the methods disclosed herein when being executed, and similar. Furthermore, the second radio network node 14 and/or the wireless device 10 may comprise a communication interface such as comprising a transmitter, a receiver and/or a transceiver and/or one or more antennas.

The methods according to the embodiments described herein for the second radio network node 14 and/or the wireless device 10 are respectively implemented by means of e.g. **a computer program product 2605** or a computer program, comprising instructions, i.e., software code portions, which, when executed on at least one processor, cause the at least one processor to carry out the actions described herein, as performed by the second radio network node 14 and/or the wireless device 10. The computer program product 2605 may be stored on **a computer-readable storage medium 2606,** e.g. a disc, a universal serial bus (USB) stick or similar. The computer-readable storage medium 2606, having stored there on the computer program product, may comprise the instructions which, when executed on at least one processor, cause the at least one processor to carry out the actions described herein, as performed by the second radio network node 14 and/or the wireless device 10. In some embodiments, the computer-readable storage medium may be a transitory or a non-transitory computer-readable storage medium. Thus, embodiments herein may disclose a second radio network node and/or the wireless device for handling communication in a wireless communications network, wherein the second radio network node and/or the wireless device comprises processing circuitry and a memory, said memory comprising instructions executable by said processing circuitry whereby said second radio network node and/or wireless device is operative to to perform any of the methods herein.

In some embodiments a more general term "radio network node" is used and it can correspond to any type of radio-network node or any network node, which communicates with a wireless device and/or with another network node. Examples of network nodes are NodeB, MeNB, SeNB, a network node belonging to Master cell group (MCG) or Secondary cell group (SCG), base station (BS), multi-standard radio (MSR) radio node such as MSR BS, eNodeB, network controller, radio-network controller (RNC), base station controller (BSC), relay, donor node controlling relay, base transceiver station (BTS), access point (AP), transmission points, transmission nodes, Remote radio Unit (RRU), Remote Radio Head (RRH), nodes in distributed antenna system (DAS), etc.

In some embodiments the non-limiting term wireless device or user equipment (UE) is used and it refers to any type of wireless device communicating with a network node and/or with another wireless device in a cellular or mobile communication system. Examples of UE are target device, device to device (D2D) UE, proximity capable UE (aka ProSe UE), machine type UE or UE capable of machine to machine (M2M) communication, Tablet, mobile terminals, smart phone, laptop embedded equipped (LEE), laptop mounted equipment (LME), USB dongles etc.

Embodiments are applicable to any RAT or multi-RAT systems, where the wireless device receives and/or transmit signals (e.g. data) e.g. New Radio (NR), Wi-Fi, Long Term Evolution (LTE), LTE-Advanced, Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB), just to mention a few possible implementations.

As will be readily understood by those familiar with communications design, that functions means or circuits may be implemented using digital logic and/or one or more microcontrollers, microprocessors, or other digital hardware. In some embodiments, several or all of the various functions may be implemented together, such as in a single application-specific integrated circuit (ASIC), or in two or more separate devices with appropriate hardware and/or software interfaces between them. Several of the functions may be implemented on a processor shared with other functional components of a wireless device or network node, for example.

Alternatively, several of the functional elements of the processing means discussed may be provided through the use of dedicated hardware, while others are provided with hardware for executing software, in association with the appropriate software or firmware. Thus, the term "processor" or "controller" as used herein does not exclusively refer to hardware capable of executing software and may implicitly include, without limitation, digital signal processor (DSP) hardware and/or program or application data. Other hardware, conventional and/or custom, may also be included. Designers of communications devices will appreciate the cost, performance, and maintenance trade-offs inherent in these design choices.

**Fig. 27** shows a Telecommunication network connected via an intermediate network to a host computer in accordance with some embodiments. With reference to Fig. 27, in accordance with an embodiment, a communication system includes telecommunication network 3210, such as a 3GPP-type cellular network, which comprises access network 3211, such as a radio access network, and core network 3214. Access network 3211 comprises a plurality of base stations 3212a, 3212b, 3212c, such as NBs, eNBs, gNBs or other types of wireless access points being examples of the radio network node 12 above, each defining a corresponding coverage area 3213a, 3213b, 3213c. Each base station 3212a, 3212b, 3212c is connectable to core network 3214 over a wired or wireless connection 3215. A first UE 3291 located in coverage area 3213c is configured to wirelessly connect to, or be paged by, the corresponding base station 3212c. A second UE 3292 in coverage area 3213a is wirelessly connectable to the corresponding base station 3212a. While a plurality of UEs 3291, 3292 are illustrated in this example being examples of the wireless device 10 above, the disclosed embodiments are equally applicable to a situation where a sole UE is in the coverage area or where a sole UE is connecting to the corresponding base station 3212.

Telecommunication network 3210 is itself connected to host computer 3230, which may be embodied in the hardware and/or software of a standalone server, a cloud-implemented server, a distributed server or as processing resources in a server farm. Host computer 3230 may be under the ownership or control of a service provider, or may be operated by the service provider or on behalf of the service provider. Connections 3221 and 3222 between telecommunication network 3210 and host computer 3230 may extend directly from core network 3214 to host computer 3230 or may go via an optional intermediate network 3220. Intermediate network 3220 may be one of, or a combination of more than one of, a public, private or hosted network; intermediate network 3220, if any, may be a backbone network or the Internet; in particular, intermediate network 3220 may comprise two or more sub-networks (not shown).

The communication system of Figure 27 as a whole enables connectivity between the connected UEs 3291, 3292 and host computer 3230. The connectivity may be described as an over-the-top (OTT) connection 3250. Host computer 3230 and the connected UEs 3291, 3292 are configured to communicate data and/or signaling via OTT connection 3250, using access network 3211, core network 3214, any intermediate network 3220 and possible further infrastructure (not shown) as intermediaries. OTT connection 3250 may be transparent in the sense that the participating communication devices through which OTT connection 3250 passes are unaware of routing of uplink and downlink communications. For example, base station 3212 may not or need not be informed about the past routing of an incoming downlink communication with data originating from host computer 3230 to be forwarded (e.g., handed over) to a connected UE 3291. Similarly, base station 3212 need not be aware of the future routing of an outgoing uplink communication originating from the UE 3291 towards the host computer 3230.

**Fig. 28** shows a host computer communicating via a base station and with a user equipment over a partially wireless connection in accordance with some embodiments

Example implementations, in accordance with an embodiment, of the UE, base station and host computer discussed in the preceding paragraphs will now be described with reference to Fig 28. In communication system 3300, host computer 3310 comprises hardware 3315 including communication interface 3316 configured to set up and maintain a wired or wireless connection with an interface of a different communication device of communication system 3300. Host computer 3310 further comprises processing circuitry 3318, which may have storage and/or processing capabilities. In particular, processing circuitry 3318 may comprise one or more programmable processors, application-specific integrated circuits, field programmable gate arrays or combinations of these (not shown) adapted to execute instructions. Host computer 3310 further comprises software 3311, which is stored in or accessible by host computer 3310 and executable by processing circuitry 3318. Software 3311 includes host application 3312. Host application 3312 may be operable to provide a service to a remote user, such as UE 3330 connecting via OTT connection 3350 terminating at UE 3330 and host computer 3310. In providing the service to the remote user, host application 3312 may provide user data which is transmitted using OTT connection 3350.

Communication system 3300 further includes base station 3320 provided in a telecommunication system and comprising hardware 3325 enabling it to communicate with host computer 3310 and with UE 3330. Hardware 3325 may include communication interface 3326 for setting up and maintaining a wired or wireless connection with an interface of a different communication device of communication system 3300, as well as radio interface 3327 for setting up and maintaining at least wireless connection 3370 with UE 3330 located in a coverage area (not shown in Fig. 28) served by base station 3320. Communication interface 3326 may be configured to facilitate connection 3360 to host computer 3310. Connection 3360 may be direct or it may pass through a core network (not shown in Fig 16) of the telecommunication system and/or through one or more intermediate networks outside the telecommunication system. In the embodiment shown, hardware 3325 of base station 3320 further includes processing circuitry 3328, which may comprise one or more programmable processors, application-specific integrated circuits, field programmable gate arrays or combinations of these (not shown) adapted to execute instructions. Base station 3320 further has software 3321 stored internally or accessible via an external connection.

Communication system 3300 further includes UE 3330 already referred to. It's hardware 3333 may include radio interface 3337 configured to set up and maintain wireless connection 3370 with a base station serving a coverage area in which UE 3330 is currently located. Hardware 3333 of UE 3330 further includes processing circuitry 3338, which may comprise one or more programmable processors, application-specific integrated circuits, field programmable gate arrays or combinations of these (not shown) adapted to execute instructions. UE 3330 further comprises software 3331, which is stored in or accessible by UE 3330 and executable by processing circuitry 3338. Software 3331 includes client application 3332. Client application 3332 may be operable to provide a service to a human or non-human user via UE 3330, with the support of host computer 3310. In host computer 3310, an executing host application 3312 may communicate with the executing client application 3332 via OTT connection 3350 terminating at UE 3330 and host computer 3310. In providing the service to the user, client application 3332 may receive request data from host application 3312 and provide user data in response to the request data. OTT connection 3350 may transfer both the request data and the user data. Client application 3332 may interact with the user to generate the user data that it provides.

It is noted that host computer 3310, base station 3320 and UE 3330 illustrated in Fig. 28 may be similar or identical to host computer 3230, one of base stations 3212a, 3212b, 3212c and one of UEs 3291, 3292 of Fig. 27, respectively. This is to say, the inner workings of these entities may be as shown in Fig. 28 and independently, the surrounding network topology may be that of Fig. 27.

In Fig. 28, OTT connection 3350 has been drawn abstractly to illustrate the communication between host computer 3310 and UE 3330 via base station 3320, without explicit reference to any intermediary devices and the precise routing of messages via these devices. Network infrastructure may determine the routing, which it may be configured to hide from UE 3330 or from the service provider operating host computer 3310, or both. While OTT connection 3350 is active, the network infrastructure may further take decisions by which it dynamically changes the routing (e.g., on the basis of load balancing consideration or reconfiguration of the network).

Wireless connection 3370 between UE 3330 and base station 3320 is in accordance with the teachings of the embodiments described throughout this disclosure. One or more of the various embodiments improve the performance of OTT services provided to UE 3330 using OTT connection 3350, in which wireless connection 3370 forms the last segment. More precisely, the teachings of these embodiments make it possible to decrease delay and responsiveness since the recovery procedure is handled in an efficient manner. Thereby the data communication, e.g. the handling or managing of data packets may be performed in an efficient manner.

A measurement procedure may be provided for the purpose of monitoring data rate, latency and other factors on which the one or more embodiments improve. There may further be an optional network functionality for reconfiguring OTT connection 3350 between host computer 3310 and UE 3330, in response to variations in the measurement results. The measurement procedure and/or the network functionality for reconfiguring OTT connection 3350 may be implemented in software 3311 and hardware 3315 of host computer 3310 or in software 3331 and hardware 3333 of UE 3330, or both. In embodiments, sensors (not shown) may be deployed in or in association with communication devices through which OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of OTT connection 3350 may include message format, retransmission settings, preferred routing etc.; the reconfiguring need not affect base station 3320, and it may be unknown or imperceptible to base station 3320. Such procedures and functionalities may be known and practiced in the art. In certain embodiments, measurements may involve proprietary UE signaling facilitating host computer 3310's measurements of throughput, propagation times, latency and the like. The measurements may be implemented in that software 3311 and 3331 causes messages to be transmitted, in particular empty or 'dummy' messages, using OTT connection 3350 while it monitors propagation times, errors etc.

**Fig. 29** shows methods implemented in a communication system including a host computer, a base station and a user equipment in accordance with some embodiments.

Fig. 29 is a flowchart illustrating a method implemented in a communication system, in accordance with one embodiment. The communication system includes a host computer, a base station and a UE which may be those described with reference to Fig. 27 and Fig. 28. For simplicity of the present disclosure, only drawing references to Fig. 29 will be included in this section. In step 3410, the host computer provides user data. In substep 3411 (which may be optional) of step 3410, the host computer provides the user data by executing a host application. In step 3420, the host computer initiates a transmission carrying the user data to the UE. In step 3430 (which may be optional), the base station transmits to the UE the user data which was carried in the transmission that the host computer initiated, in accordance with the teachings of the embodiments described throughout this disclosure. In step 3440 (which may also be optional), the UE executes a client application associated with the host application executed by the host computer.

**Fig. 30** shows methods implemented in a communication system including a host computer, a base station and a user equipment in accordance with some embodiments.

Fig. 30 is a flowchart illustrating a method implemented in a communication system, in accordance with one embodiment. The communication system includes a host computer, a base station and a UE which may be those described with reference to Fig. 27 and Fig. 28. For simplicity of the present disclosure, only drawing references to Fig. 30 will be included in this section. In step 3510 of the method, the host computer provides user data. In an optional substep (not shown) the host computer provides the user data by executing a host application. In step 3520, the host computer initiates a transmission carrying the user data to the UE. The transmission may pass via the base station, in accordance with the teachings of the embodiments described throughout this disclosure. In step 3530 (which may be optional), the UE receives the user data carried in the transmission.

**Fig. 31** shows methods implemented in a communication system including a host computer, a base station and a user equipment in accordance with some embodiments.

Fig. 31 is a flowchart illustrating a method implemented in a communication system, in accordance with one embodiment. The communication system includes a host computer, a base station and a UE which may be those described with reference to Fig. 27 and Fig. 28. For simplicity of the present disclosure, only drawing references to Fig. 31 will be included in this section. In step 3610 (which may be optional), the UE receives input data provided by the host computer. Additionally or alternatively, in step 3620, the UE provides user data. In substep 3621 (which may be optional) of step 3620, the UE provides the user data by executing a client application. In substep 3611 (which may be optional) of step 3610, the UE executes a client application which provides the user data in reaction to the received input data provided by the host computer. In providing the user data, the executed client application may further consider user input received from the user. Regardless of the specific manner in which the user data was provided, the UE initiates, in substep 3630 (which may be optional), transmission of the user data to the host computer. In step 3640 of the method, the host computer receives the user data transmitted from the UE, in accordance with the teachings of the embodiments described throughout this disclosure.

**Fig. 32** show methods implemented in a communication system including a host computer, a base station and a user equipment in accordance with some embodiments.

Fig. 32 is a flowchart illustrating a method implemented in a communication system, in accordance with one embodiment. The communication system includes a host computer, a base station and a UE which may be those described with reference to Fig. 27 and Fig. 28. For simplicity of the present disclosure, only drawing references to Fig. 32 will be included in this section. In step 3710 (which may be optional), in accordance with the teachings of the embodiments described throughout this disclosure, the base station receives user data from the UE. In step 3720 (which may be optional), the base station initiates transmission of the received user data to the host computer. In step 3730 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

It will be appreciated that the foregoing description and the accompanying drawings represent non-limiting examples of the methods and apparatus taught herein. As such, the apparatus and techniques taught herein are not limited by the foregoing description and accompanying drawings. Instead, the embodiments herein are limited only by the following claims.

| Abbreviation | Explanation |
|---|---|
| 3GPP | 3rd Generation Partnership Project |
| IAB | Integrated Access Backhaul |
| CN | Core Network |
| CU | Central Unit |
| DU | Distributed Unit |
| CP | Control Plane |
| UP | User Plane |
| UE | User Equipment |
| PDCP | Packet Data Convergence Protocol |
| RLC | Radio Link Control |
| MAC | Medium Access Control |
| SDU | Service Data Unit |
| PDU | Protocol Data Unit |
| SR | Scheduling Request |
| BSR | Buffer Status Report |
| UL | Uplink |
| DL | Downlink |
| ACK | Acknowledgement |
| NACK | Negative ACK |
| RRC | Radio Resource Control |
| SIB | System Information Block |

## Claims

1. A method for recovering link failures in a multi-hop wireless communications network (1), wherein the multi-hop wireless communications network (1) comprises a first radio network node (13) and a second network node (14), wherein the first and second network nodes relay data packets between a donor node and a wireless device (10) via a parent node, the method being performed by the first radio network node (13) comprising:
*determining (1701)* that a first recovery procedure of a connection at the first radio network node (13) has failed, wherein the determining comprises any one or more of:
- an RRC re-establishment succeeds and determining that the first radio network node (13) is not connected to same donor node as before the recovery procedure,
- an RRC re-establishment succeeds and determining that the first radio network node (13) is not using the same IP address as before the recovery procedure;
*deciding* (1702) upon a failure of the first recovery procedure of the connection at the first radio network node (13), to trigger an initiation of a second recovery procedure of a second connection at the second radio network node (14),
*transmitting (1703)* to the second radio network node (14), an indication for triggering the initiation of the second recovery procedure of the second connection.

2. The method according to claim 1, further comprising detecting a radio link failure between the first network node and the parent node followed by starting the first recovery procedure.

3. The method according to claims 1-2, further comprising searching for an alternate parent node to re-establish its connection.

4. The method according to claim 1, further comprising notifying the at least one second radio network node, that is has experienced a link failure.

5. A computer program comprising instructions, which when executed by a processor, causes the processor to perform the actions according to any of the claims 1-4.

6. A carrier comprising the computer program of claim 5, wherein the carrier is one of an electronic signal, an optical signal, an electromagnetic signal, a magnetic signal, an electric signal, a radio signal, a microwave signal, or a computer-readable storage medium.

7. A first radio network node (13) for recovering link failures in a wireless communications network (1), wherein the multi-hop wireless communications network (1) comprises a first radio network node (13) and second network node (14), wherein the first and second network nodes relay data packets between a donor node and a wireless device (10) via parent node, and wherein the first radio network node (13) is configured to:
determine that a first recovery procedure of a connection at the first radio network node (13) has failed, wherein the determining is adapted to comprise any one or more of:
- an RRC re-establishment succeeds and determine that the first radio network node (13) is not connected to same donor node as before the recovery procedure,
- an RRC re-establishment succeeds and determine that the first radio network node (13) is not using the same IP address as before the recovery procedure;
decide upon a failure of the first recovery procedure of a connection at the first radio network node (13), to trigger an initiation of a second recovery procedure of a second connection at the second radio network node (14); and
transmit to the second radio network node (14), an indication for triggering the initiation of the second recovery procedure of the second connection.

8. The method according to claim 7, further comprising detecting a radio link failure between the first network node and the parent node and starting the first recovery procedure.

9. The method according to claims 7-8, further comprising searching for an alternate parent node to re-establish its connection.

10. The method according to claim 7, further comprising notifying the at least one second radio network node, that it has experienced a link failure.

## Patentansprüche

1. Verfahren zum Retten eines Verbindungsfehlschlags in einem Multi-Hop-Drahtloskommunikationsnetzwerk (1), wobei das Multi-Hop-Drahtloskommunikationsnetzwerk (1) einen ersten Funknetzwerkknoten (13) und einen zweiten Netzwerkknoten (14) umfasst, wobei der erste und der zweite Netzwerkknoten Datenpakete zwischen einem Spenderknoten und einer Drahtlosvorrichtung (10) über einen übergeordneten Knoten weiterleiten, wobei das Verfahren durch den ersten Funknetzwerkknoten (13) durchgeführt wird und umfasst:
*Bestimmen* (1701), dass eine erste Rettungsprozedur einer Verbindung an dem ersten Funknetzwerkknoten (13) fehlgeschlagen ist, wobei das Bestimmen eines oder mehrere umfasst von:
- eine RRC-Wiederherstellung ist erfolgreich und Bestimmen, dass der erste Funknetzwerkknoten (13) nicht mit demselben Spenderknoten wie vor der Rettungsprozedur verbunden ist,
- eine RRC-Wiederherstellung ist erfolgreich und Bestimmen, dass der erste Funknetzwerkknoten (13) nicht dieselbe IP-Adresse wie vor der Rettungsprozedur verwendet;
*Entscheiden* (1702), bei einem Fehlschlagen der ersten Rettungsprozedur der Verbindung an dem ersten Funknetzwerkknoten (13), eine Einleitung einer zweiten Rettungsprozedur einer zweiten Verbindung an dem zweiten Funknetzwerkknoten (14) auszulösen,
*Übertragen* (1703) einer Anzeige zum Auslösen der Einleitung der zweiten Rettungsprozedur der zweiten Verbindung an den zweiten Funknetzwerkknoten (14).

2. Verfahren nach Anspruch 1, ferner umfassend ein Erkennen eines Funkverbindungsfehlschlags zwischen dem ersten Netzwerkknoten und dem übergeordneten Knoten, gefolgt von einem Starten der ersten Rettungsprozedur.

3. Verfahren nach den Ansprüchen 1 bis 2, ferner umfassend ein Suchen nach einem alternativen übergeordneten Knoten, um seine Verbindung wiederherzustellen.

4. Verfahren nach Anspruch 1, ferner umfassend ein Benachrichtigen des mindestens einen zweiten Funknetzwerkknotens, dass ein Verbindungsfehlschlag aufgetreten ist.

5. Computerprogramm, umfassend Anweisungen, die, wenn sie durch einen Prozessor ausgeführt werden, den Prozessor veranlassen, Aktionen nach einem der Ansprüche 1 bis 4 durchzuführen.

6. Träger, umfassend das Computerprogramm nach Anspruch 5, wobei der Träger eines von einem elektronischen Signal, einem optischen Signal, einem elektromagnetischen Signal, einem magnetischen Signal, einem elektrischen Signal, einem Funksignal, einem Mikrowellensignal oder einem computerlesbaren Speichermedium ist.

7. Erster Funknetzwerkknoten (13) zum Retten des Verbindungsfehlschlags in einem Multi-Hop-Drahtloskommunikationsnetzwerk (1), wobei das Multi-Hop-Drahtloskommunikationsnetzwerk (1) einen ersten Funknetzwerkknoten (13) und einen zweiten Netzwerkknoten (14) umfasst, wobei der erste und der zweite Netzwerkknoten Datenpakete zwischen einem Spenderknoten und einer Drahtlosvorrichtung (10) über einen übergeordneten Knoten weiterleiten, und wobei der erste Funknetzwerkknoten (13) konfiguriert ist zum:
Bestimmen, dass eine erste Rettungsprozedur einer Verbindung an dem ersten Funknetzwerkknoten (13) fehlgeschlagen ist, wobei das Bestimmen angepasst ist, um eines oder mehrere zu umfassen von:
- eine RRC-Wiederherstellung ist erfolgreich und Bestimmen, dass der erste Funknetzwerkknoten (13) nicht mit demselben Spenderknoten wie vor der Rettungsprozedur verbunden ist,
- eine RRC-Wiederherstellung ist erfolgreich und Bestimmen, dass der erste Funknetzwerkknoten (13) nicht dieselbe IP-Adresse wie vor der Rettungsprozedur verwendet;
Entscheiden, bei einem Fehlschlagen der ersten Rettungsprozedur einer Verbindung an dem ersten Funknetzwerkknoten (13), eine Einleitung einer zweiten Rettungsprozedur einer zweiten Verbindung an dem zweiten Funknetzwerkknoten (14) auszulösen; und
Übertragen einer Anzeige zum Auslösen der Einleitung der zweiten Rettungsprozedur der zweiten Verbindung an den zweiten Funknetzwerkknoten (14).

8. Verfahren nach Anspruch 7, ferner umfassend das Erkennen eines Funkverbindungsfehlschlags zwischen dem ersten Netzwerkknoten und dem übergeordneten Knoten und das Starten der ersten Rettungsprozedur.

9. Verfahren nach den Ansprüchen 7 bis 8, ferner umfassend ein Suchen nach einem alternativen übergeordneten Knoten, um seine Verbindung wiederherzustellen.

10. Verfahren nach Anspruch 7, ferner umfassend das Benachrichtigen des mindestens einen zweiten Funknetzwerkknotens, dass ein Verbindungsfehlschlag aufgetreten ist.

## Revendications

1. Procédé de récupération des défaillances de liaison dans un réseau de communications sans fil multi-sauts (1), dans lequel le réseau de communications sans fil multi-sauts (1) comprend un premier nœud de réseau radio (13) et un second nœud de réseau (14), dans lequel le premier et le second nœud de réseau relaient des paquets de données entre un nœud donneur et un dispositif sans fil (10) par l'intermédiaire d'un nœud parent, le procédé étant effectué par le premier nœud de réseau radio (13), comprenant :
la *détermination* (1701) qu'une première procédure de récupération d'une connexion au niveau du premier nœud de réseau radio (13) a échoué, dans lequel la détermination comprend l'un quelconque ou plusieurs parmi :
- un rétablissement RRC réussit et une détermination que le premier nœud de réseau radio (13) n'est pas connecté au même nœud donneur qu'avant la procédure de récupération,
- un rétablissement RRC réussit et une détermination que le premier nœud de réseau radio (13) n'utilise pas la même adresse **IP** qu'avant la procédure de récupération ;
la *décision* (1702), en cas d'échec de la première procédure de récupération de la connexion au niveau du premier nœud de réseau radio (13), de déclencher un lancement d'une seconde procédure de récupération d'une seconde connexion au niveau du second nœud de réseau radio (14),
la *transmission* (1703) au second nœud de réseau radio (14), d'une indication permettant de déclencher le lancement de la seconde procédure de récupération de la seconde connexion.

2. Procédé selon la revendication 1, comprenant en outre la détection d'une défaillance de liaison radio entre le premier nœud de réseau et le nœud parent, suivie du lancement de la première procédure de récupération.

3. Procédé selon les revendications 1 à 2, comprenant en outre la recherche d'un autre nœud parent pour rétablir sa connexion.

4. Procédé selon la revendication 1, comprenant en outre l'envoi d'une notification à l'au moins un second nœud de réseau radio qu'il a subi une défaillance de liaison.

5. Programme informatique comprenant des instructions qui, lorsqu'elles sont exécutées par un processeur, amènent le processeur à effectuer les actions selon l'une quelconque des revendications 1 à 4.

6. Porteuse comprenant le programme informatique selon la revendication 5, dans lequel la porteuse est l'un parmi un signal électronique, un signal optique, un signal électromagnétique, un signal magnétique, un signal électrique, un signal radio, un signal micro-onde, ou un support de stockage lisible par ordinateur.

7. Premier nœud de réseau radio (13) permettant la récupération des défaillances de liaison dans un réseau de communications sans fil (1), dans lequel le réseau de communications sans fil multi-sauts (1) comprend un premier nœud de réseau radio (13) et un second nœud de réseau (14), dans lequel le premier et le second nœud de réseau relaient des paquets de données entre un nœud donneur et un dispositif sans fil (10) par l'intermédiaire d'un nœud parent, et dans lequel le premier nœud de réseau radio (13) est configuré pour :
déterminer qu'une première procédure de récupération d'une connexion au niveau du premier nœud de réseau radio (13) a échoué, dans lequel la détermination est adaptée pour comprendre l'un quelconque ou plusieurs parmi :
- un rétablissement RRC réussit et déterminer que le premier nœud de réseau radio (13) n'est pas connecté au même nœud donneur qu'avant la procédure de récupération,
- un rétablissement RRC réussit et déterminer que le premier nœud de réseau radio (13) n'utilise pas la même adresse IP qu'avant la procédure de récupération ;
décider, en cas d'échec de la première procédure de récupération d'une connexion au niveau du premier nœud de réseau radio (13), de déclencher un lancement d'une seconde procédure de récupération d'une seconde connexion au niveau du second nœud de réseau radio (14) ; et
transmettre au second nœud de réseau radio (14), une indication permettant de déclencher le lancement de la seconde procédure de récupération de la seconde connexion.

8. Procédé selon la revendication 7, comprenant en outre la détection d'une défaillance de liaison radio entre le premier nœud de réseau et le nœud parent et le lancement de la première procédure de récupération.

9. Procédé selon les revendications 7 à 8, comprenant en outre la recherche d'un autre nœud parent pour rétablir sa connexion.

10. Procédé selon la revendication 7, comprenant en outre l'envoi d'une notification à l'au moins un second nœud de réseau radio qu'il a subi une défaillance de liaison.
